(19) Europäisches Patentamt
European Patent Office
Office européen des brevets

(11) **EP 1 035 724 A1**

(12) **EUROPEAN PATENT APPLICATION**

(43) Date of publication:
**13.09.2000 Bulletin 2000/37**

(51) Int Cl.$^7$: **H04M 15/00**

(21) Application number: **99830125.3**

(22) Date of filing: **09.03.1999**

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI**<br><br>(71) Applicant: **Wind Telecomunicazioni S.p.A.**<br>**00198 Roma (IT)** | (72) Inventor: **Secli, Eugenio**<br>**00138 Roma (IT)**<br><br>(74) Representative: **Steinfl, Alessandro et al**<br>**Società Italiana Brevetti**<br>**Piazza di Pietra 39**<br>**00186 Roma (IT)** |

(54) **Telephone billing system for real-time automatic detection of the best bill and the best billing profile of a user**

(57)    A telephone billing system for real-time automatic detection of the best bill and of the best billing profile of a user on the basis of any number of tariff plans, comprises: a switching unit (100), receiving as an input records related to events resulting from traffic(30); a set of first level record-referred processing units (50, 200, 500); a set of second level volume-referred processing units (1010, 1020); a set of third level tax-referred processing units (1110, 1120); a set of fourth level adding units (1210, 1220); and a minimization unit (900).

Fig. 4

**Description**

The present invention relates to a telephone billing system for real-time automatic detection of the best bill and of the best billing profile of a user.

In particular, by using the system according to the invention a lowest-value telephone bill will be generated, which takes into account all the parameters that can be associated to the user according to the various tariff plans and services.

Usually, a telephone company produces various tariff plans to meet the demand of a variety of market "profiles", creating therefore tariff models for companies, households, single user, attitudes for day or night, national, international calls etc. However, a generic single or aggregated (e.g. a company) user can vary his own "profile" over time, thus adopting an unsuitable tariff plan. Therefore this entails a markedly higher cost for the user. Thus, it can be very useful for a user to be provided with information regarding an optimal tariff profile and the value of the best bill calculated accordingly.

In the field of the telephone billing systems, systems of the "Data Warehouse" type are known to the art.

A first category of such systems is capable of detecting a number of optimal parameters, obtainable however only after the calculation of a telephone bill, by means of off-line type calculation systems. The determination of such a best bill is not an intrinsic part of the bill calculation process, as acting in a second phase with respect to the productive process, its use being therefore rather limited.

A second category of such systems allows the calculation of some "better" (not optimal) parameters, this time during the bill calculation process. The number of parameters calculated is anyhow small, usually smaller than the number of the parameters calculated using systems of the first category. In fact, this is due to the fact that the calculation of the optimal parameters is such as to require an exhaustive processing of an enormous amount of data, wherefore there are memory occupation and processing time problems not solved by the systems known in the art.

A comparative example between results obtained with the present invention and results obtained with the systems known to the art will be reported at the end of the present description.

The problem of the best bill requires the potential determination of as many bills as are the configurations of the various tariff plans, as well as the management of the lowest value. This implies an enormous amount of data with prohibitive memory managements and a far too long processing time, such as to hinder the completion of the production process for a significant volume of customers (in the order of ten million) and of the related tariff plans.

Essentially, the problems of the improved billing systems (anyhow not optimal) known to the art can be traced back to three typologies:

1) Technical: Memory dimension and calculation time, hence the possibility to accept a limited number of users and the possibility to calculate a limited number of cost parameters in order to assess improved tariff profiles for the user.

2) Economical: High cost of the data memory devices and need to purchase several processors to partition the processes.

3) Functional-strategic: impossibility of assessing exactly the "market share" of the competitors; inability to forestall the market to prevent user migration to other providers, as well as impossibility of providing to the user its lowest-price service.

A first object of the present invention is that of producing the best telephone bill, intended as lowest-value bill, analyzing the tariff plans configured in the system and basing its own economic processing both with respect to physical parameters like time (time-based, time duration), number (calling number, called number), zone (origin zone, destination zone), typology (information type), transmission media (transmission media type) as well as with respect to aggregated configurations as friend-and-family service (F&F), "user group", "closed user group", "large account", in observance of the logics adopted for the configuration of the tariff plans adopted by the telephone company.

The present invention analyzes from the economical point of view the user "profile" and is capable not only of indicating him the optimal tariff plan, but also to make him migrate automatically from a tariff plan to another, so as to minimize the amount of the bill. An object of the present invention is therefore that of not forcing the users to choose a particular tariff plan which is binding in respect of the bill calculation anymore, the users having on the contrary the possibility of declaring a simple reference tariff plan that will not be necessarily the one actually implemented for the payment of the services they enjoyed.

With the present invention the actual amount due and the relevant optimal tariff plan detected will be highlighted for every produced bill, together with the amount that could have been due by the user, had he been using the reference tariff plan of his choice, so as to point out the resulting saving.

A second object of the present invention is that of a real-time providing of the amount of the two bills described above (the one according to the reference tariff plan and the optimal one), accrued until the moment of the user request, so that he can acknowledge his "Profile" assessed up to that day. The values presented will be extremely precise, as the present invention is capable of producing these information including services used with a great readiness, within minutes.

A third object of the present invention is that of providing the possibility to assess exactly the "market share" of the competitors, allowing the prevention of user migration to other providers.

A fourth object of the present invention is that of providing the possibility of performing business simulations, determining new tariff plans starting from the configurations existing on the telephone market.

In particular, the present invention provides a telephone billing system for real-time automatic detection of the best bill and of the best billing profile of a user on the basis of any number of tariff plans, characterized in that it comprises:

a) a switching unit receiving as an input records related to events resulting from telephone traffic and outputting two types of files, the first type of file being formed by records having a single economic interpretation of the tariff plans and the second type of file being formed by records having several economic interpretations of the tariff plans;

b) a set of first level record-referred processing units, comprising:

b1) a first record-referred processing unit, receiving as an input said first type of file and outputting an economic value referring to the telephone traffic of data contained in said first type of file;

b2) a second record-referred processing unit, receiving as an input said second type of file and outputting first economic values referring to the telephone traffic of data contained in said second type of file, said first economic values referring to the traffic on said second type of file being based on optimal parameters;

b3) a third record-referred processing unit, receiving as an input said second type of file and outputting second economic values referring to the telephone traffic of data contained in said second type of file, said second economic values referring to the telephone traffic being based on reference parameters, in particular parameters set through a user contract;

c) a set of second level volume-referred processing units, comprising:

c1) a first volume-referred processing unit, receiving as a first input the output of said first record-referred processing unit and as a second input the output of said second record-referred processing unit and outputting first volume-referred economic values of the data contained in said second type of file, said first volume-referred economic values being based on said optimal parameters;

c2) a second volume-referred processing unit, receiving as a first input the output of said first record-referred processing unit and as a second input the output of said third record-referred processing unit and outputting second volume-referred economic values of the data contained in said second type of file, said second volume-referred economic values being based on said reference parameters;

d) a set of third level tax-referred processing units, comprising:

d1) a first tax-referred processing unit, receiving as an input the output of said first volume-referred processing unit and outputting first tax-referred economic values of the data contained in said second type of file, said first tax-referred economic values being based on said optimal parameters;

d2) a second tax-referred processing unit, receiving as an input the output of said second volume-referred processing unit and outputting second tax-referred economic values of the data contained in said second type of file, said second economic values being based on said reference parameters;

e) a set of fourth level adding units, comprising:

e1) a first adding unit, adding the output of said second record-referred processing unit, the output of said first volume-referred processing unit and the output of said first tax-referred processing unit and outputting first sums, based on said optimal parameters;

e2) a second adding unit, adding the output of said third record-referred processing units, the output of said second volume-referred processing unit and the output of said second tax-referred processing unit and outputting second sums, based on said reference parameters; and

f) a minimization unit for finding the lowest value between said first sums and said second sums.

Advantageous features of the present invention are provided in the dependent claims thereof.

A first advantage of the present invention lies in the capability to analyze the user profile according to all the configured tariff plans and services.

A second advantage lies in the capability of selecting and producing the lowest-value bill .

A third advantage lies in the capability of performing the processing steps by chains of on-line subsequent ratings, distributing the CPU engagement homogeneously and reducing the required memory amount. Each chain process is activated when needed, i.e. when a call data record (CDR) file is made available from the network. Thus, a processing system of the on-line type is obtained. Moreover, the processes are chain-linked in such a way that the outputs of a processing level are the input of the subsequent processing level, so as to allow the disposal of the partial data and the resulting reduction of memory use.

The present invention shall be disclosed hereinafter according to its embodiments given by way of example and not for limiting purposes. Reference to figures of the annexed drawings will be made, wherein:

figure 1 shows the structure of a call data record (CDR);
figures 2 and 3 show a series of elemental components of the apparatus according to the invention;
figure 4 shows a generic block diagram of the apparatus according to the invention;
figure 5 shows a detailed block diagram of the unit 200 of figure 4;
figure 6 shows a detailed block diagram of the unit 50 of figure 4;
figure 7 shows a detailed block diagram of the unit 300 of figure 6;
figure 8 shows a preferred configuration of the access modes to the unit 302 of figure 7;
figure 9 shows a detailed block diagram of the unit 400 of figure 6;
figure 10 shows a detailed block diagram of the unit 800 of figure 6;
figure 11 shows a detailed block diagram of the unit 500 of figure 4;
figure 12 shows a detailed block diagram of the unit 1010 of figure 4;
figure 13 shows a detailed block diagram of the unit 1020 of figure 4;
figure 14 shows a detailed block diagram of the unit 1110 of figure 4;
figure 15 shows a detailed block diagram of the unit 1120 of figure 4;
figure 16 shows a table related to the structure of a generic tariff plan;
figure 17 shows a table related to the cost parameters of the example of figure 16;
figure 18 shows an exemplifying table related to two tariff plans and to three services;
figures 19 and 20 show graph structures related to the example of figure 18;
figure 21 shows a table of a rough estimate of a billing system known to the art;
figures 22 and 23 show estimate tables related to the system according to the present invention; and
figure 24 illustrates a hardware structure for the system according to the present invention.

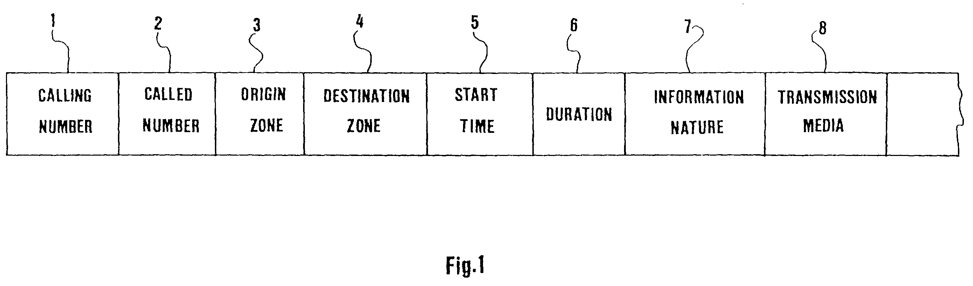

With reference first of all to figure 1, a data structure is shown indicated with the term Call Data Record (CDR). The CDR consists of a series of fields, in particular: a Calling Number field 1, a Called Number field 2, an Origin Zone field 3, a Destination Zone field 4, a Start Time field 5, a Duration field 6, an Information Nature field 7, and a Transmission Media field 8.

It is understood that other fields can compose the CDR, different from case to case depending on the use thereof by the various providers.

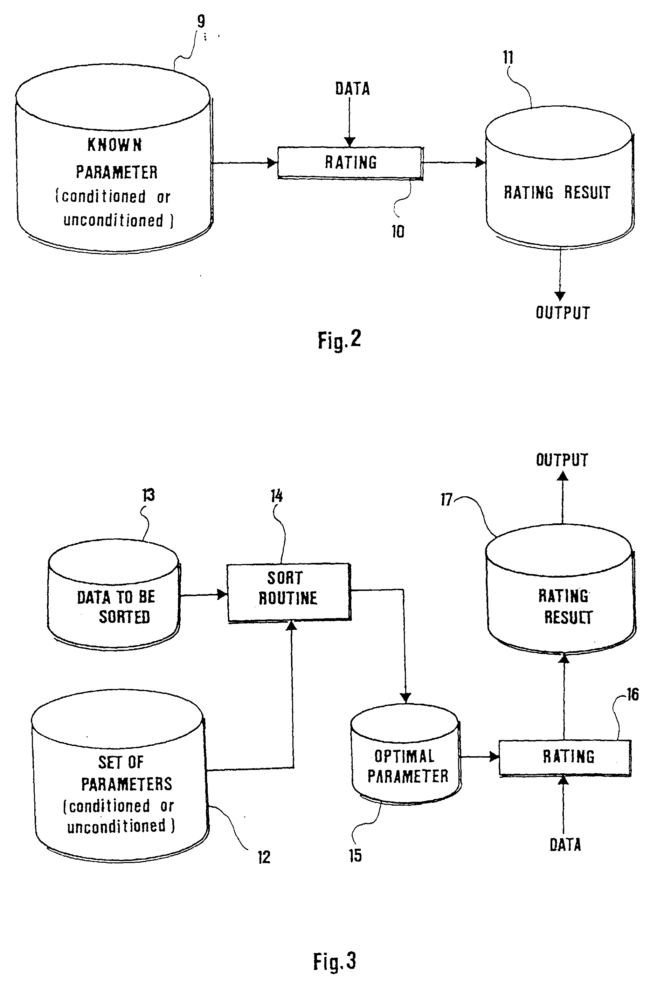

The next figures 2 and 3 show first of all, for the sake of clarity, a series of elemental components of the system according to the present invention.

In figure 2 an elementary unit generating rating results is shown.

In particular, a memory unit 9 is shown, containing a known rating parameter, of the conditional or unconditional type.

A rating parameter is nothing else than a factor of a calculation rule to apply on a set of data, for instance the data contained in the CDR.

For parameter of the conditional type a parameter is understood, whose entity depends on the configuration of a set of services included in the contract of the particular user selected, e.g. a parameter whose entity depends on the field 2 (Called Number) of the CDR. For parameter of the unconditional type a parameter is instead understood, that does not depend on the aforesaid configuration.

The parameter application on the data takes place in a rating unit 10, and the rating result is stored in a memory unit 11, whose contents will be accessible to further units of the system according to the invention.

For example, a Tariff Plan 1, a Tariff Plan 2 and a "SMS Cost" (short-message-service) parameter equal to ITL 100/message, independent of the tariff plan is taken into consideration. Such a parameter will be a single type parameter (i.e. not depending on the tariff plan) and of the unconditional type (i.e. not depending on the value of any of the CDR fields).

Instead, a parameter of the "National Voice" type, equal to ITL 300/minute for Tariff Plan 1 and to ITL 500/minute for Tariff Plan 2 is now taken into consideration. Such a parameter is a multiple type parameter (i.e. depending on the tariff plan) and of the unconditional type (i.e. not depending on the value of any of the CDR fields).

Finally, a parameter of the "Called Number Discount" type, such parameter being e.g. 0% when the called number first integers are not 06 and otherwise being 25% is taken into consideration. Such a parameter is a single type parameter (it does not depend on the tariff plan) and conditional (it depends on the Called number field rating).

The next figure 3 differs from figure 2 in that the parameter to apply is not known and has to be previously determined, on the basis of an optimum criterion or on the basis of a certain statistical criterion.

The calculation of the parameter to be applied might depend both on the data set treated by this parameter, and on the peculiar sort and aggregation routines that are activated.

A sort routine is a process starting from an initial data set and enabling to obtain a final data set, sorted according to a certain logic. In the case wherein, besides the sort, aggregation operations are performed as well, the number of elements of the final data set might be lower than the one of the initial set.

Figure 3 shows to this purposes a memory unit 12 containing a set of the possible parameters to apply, a memory unit 13 containing a data set to sort and a calculation unit 14 wherein, one of the possible parameters among those contained in unit 12 will be detected, optimal according to a certain criterion distinct from case to case, based on the data to sort and on instructions output from a control unit, not shown in figure and to be described below.

The optimal parameter determined (and therefore the optimal factor to apply on the data) is stored in a memory unit 15. From now on the pattern is identical to that of the preceding figure 2. Thus, the application of such optimal parameter on the data takes place in a rating unit 16, and the rating result is stored in a unit 17 wherefrom is made accessible to the further units of the system according to the invention.

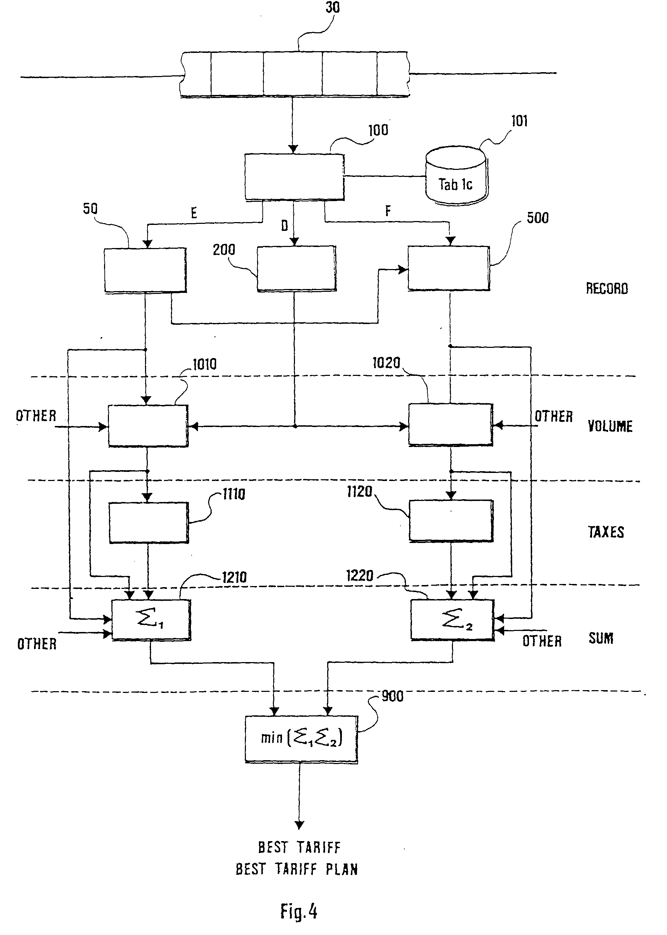

Reference will be made to figure 4, showing a block diagram of the system according to the present invention.

First of all a switching unit 100 is shown, in charge of the creation of the files that will be processed in three chains, represented by lines D, E and F outputting from the unit 100. The unit 100 receives as an input the files 30 generated from the network, containing a set of CDR records related to events resulting from telephone traffic. For each CDR record the unit 100 detects the type of service represented (national voice, SMS, international voice etc.) and outputs two types of file.

The first type of file comprises all and only all the records having a single economic interpretation for all the tariff plans. Such records relate for instance to services like SMS and VoiceMail (Answering Service). The records contained in such first type of file are fed, along a line D, to a unit 200.

The second type of file comprises all and only all the records having several economic interpretations for the different tariff plans considered. The records contained in such second type of file are copied and fed, along lines E and F, to respective units 50 and 500.

To perform the aforesaid distinction between first and second type of file, the unit 100 must know which telephone traffic services (and therefore the relevant records) are to be fed along line D and which along lines E and F. This information as well comes from the aforementioned control unit. In particular, to the unit 100 a memory unit 101 is associated, comprising a table Tab1c wherein the telephone traffic services codes (national voice, international voice etc.) are present together with a two values marker indicating whether the record is to be fed towards line D or towards lines E, F. These values can be varied dynamically by the control unit.

The units 50, 200 and 500 are first level units, performing processing operations on the various records, as evidenced from the caption <u>RECORD</u> of figure 4.

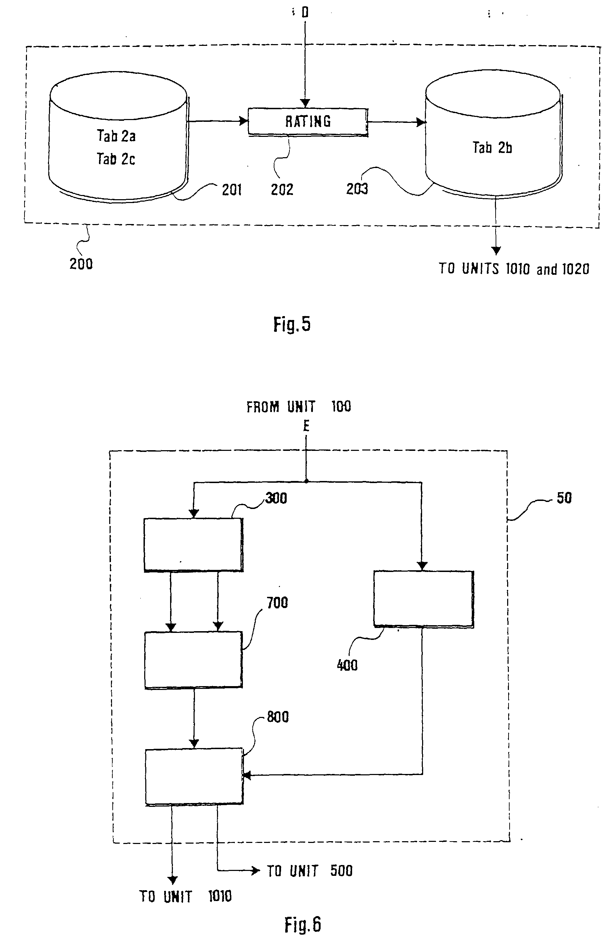

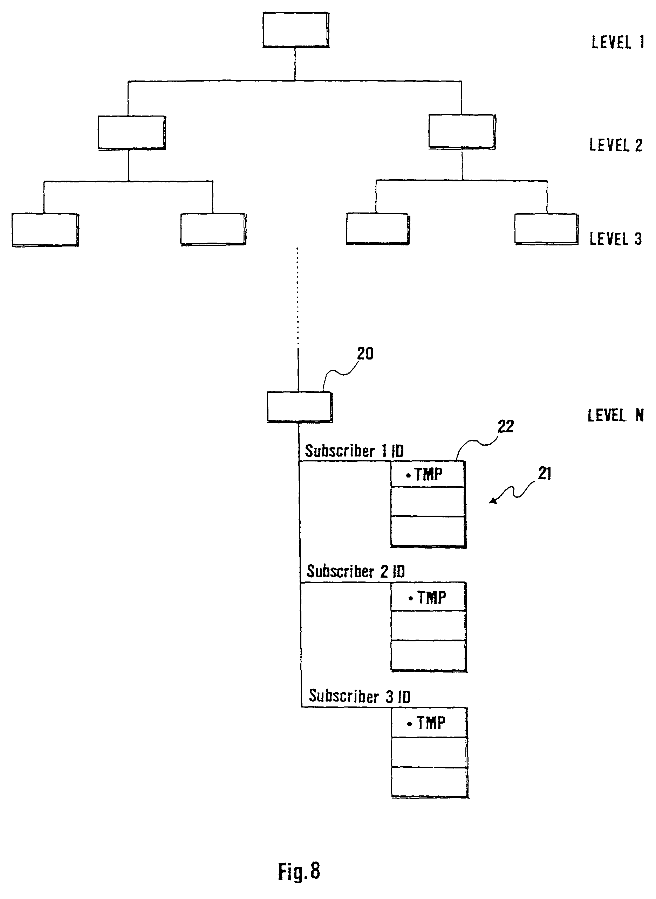

The unit 200 is realized according to a generic structure as the one previously represented in figure 2. A more detailed structure of the unit 200 is represented in figure 5, to which reference will now be made for sake of clarity.

Figure 5 shows how the unit 200 comprises respective memory units 201 and 203 and a rating unit 202.

The memory unit 201 contains a price table Tab2a, wherein to each service the unit price according to the measuring unit configured for the same service is associated. For each record switched by the unit 100 along line D the relevant price is adopted (rating step) and an addition record R1, contained in a table Tab2b present in the memory unit 203, is updated. The record R1 is associated to each user and contains a value that will be included in the bill calculation. Defined as R2 a generic record fed along line D from the unit 100, in the unit 200 the following operations are carried out:

- reading of the input record R2, with user recognition (calling number or subscriber ID);
- reading from the table Tab2b in 203 of the pertaining record R1;
- rating of the input record R2 inside of the calculation unit 202 and updating of the R1 content according to the logical instruction R1 = R1 + R2;
- loading of the updated record R1 in table Tab2b of memory unit 203.

The number of fields of record R1 depends on the number of the processing parameters of the services processed in the unit 200. Such processing parameters can anyway be summed up in taxation parameters referring to the telephone traffic or in discount parameters referring to the telephone traffic. By way of example, the record R1 can be imagined to be formed by m + n + 1 fields, wherein m relates to the number of different taxes, n relates to the number of different discounts, while the last field relates to the subscriber ID.

The variability of the number of fields of record R1, and accordingly the possibility of modifying such number in a dynamic way, is managed by the aforementioned control unit. In particular, the memory unit 201 comprises a table Tab2c wherein the codes of the traffic services managed by unit 200, together with an (n + m) value marker, which indicates for each parameter which is the field of record R1 whose sum is to be updated as a function of the parameter itself.

To optimize the machine time employed, once the file is received from the unit 100 a sorting according to the subscriber ID is advantageously provided in the sense that all the records pertaining to the same subscriber are sorted consecutively. Thus, only one reading will be needed from the Tab2b for each single user generating telephone traffic recorded on the input file. For example, the case that a user has performed four events resulting from traffic is supposed. This means that in the file inputting in the unit 200 there will be four records, and from what was reported heretofore it follows that the unit 200 should perform four memory accesses. On the other hand, sorting the input file, only one memory access will be needed and the record R1 will be updated four times (corresponding to the four consecutive records), to reinsert it afterwards in the table Tab2b of the memory unit 203.

It is to be intended that such a sorting can also be provided within the unit 100, so that the records are input to the unit 200 already sorted.

Reference will now be made to figures 4 and 6, to describe the unit 50. In particular, figure 6 represents a detailed diagram of this unit.

In the unit 50 all and only all the CDR's having several economic interpretations according to all the tariff plans considered are processed, as e.g. the "national voice ". Object of the unit 50 (and of the subsequent units chained thereto) is that of determining and rating the set of optimal parameters referring to CDR's relating to a certain user. This determination and rating will be carried out at the same time with the determination and rating of the parameters actually taxable to that user, a task assigned to the unit 500 of figure 4 and to the units chained thereto.

With reference to the unit 50, it has to be mentioned that the set of parameters wherein the optimal statistical parameters will be detected varies with the different tariff plans. The unit 50 will use the sort routines introduced in the preceding figure 3, so as to detect the optimal statistical parameters (e.g. the F&F numbers) to be applied on data fed from the unit 100 along the line E.

With reference to figure 6, the unit 50 comprises a control and memory unit 300, a detection unit 700 of the optimal parameters by use of the sort routines, as well as two rating and memory units 400 and 800.

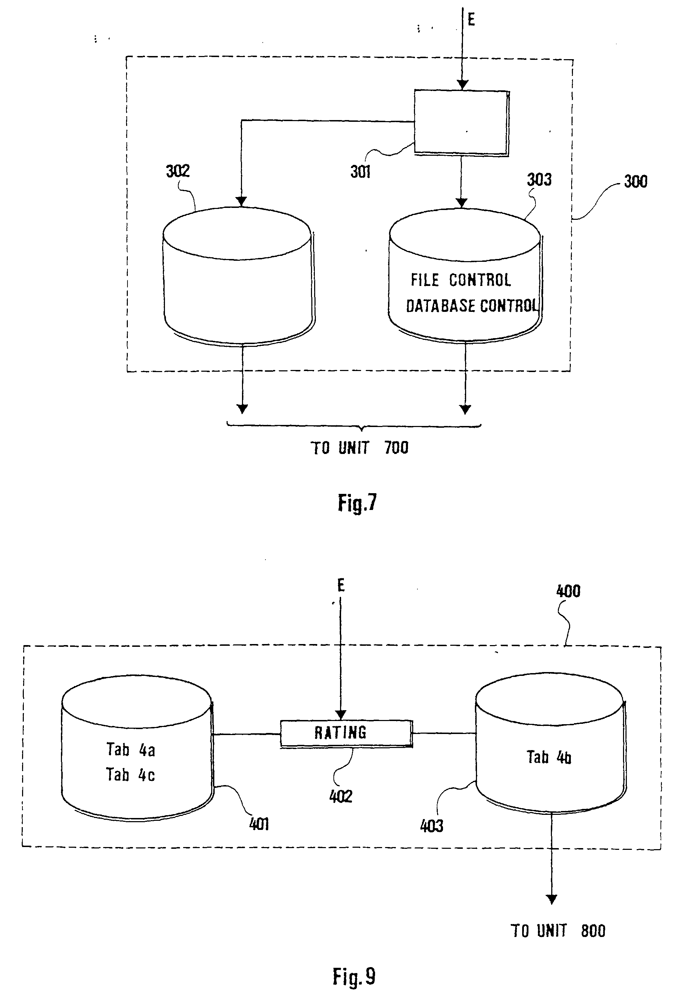

Firstly, the control and memory unit 300 will be described in detail, with reference to figures 7 and 8. As it can be seen in figure 7, the unit 300 comprises a control unit 301 and a memory unit 302. The control unit 301 has the task of guiding the sort and rating processes within the entire chain of the unit 50 for the data selective processing. In particular, the sort routines and the rating units of block 700 of figure 5 will take from memory unit 302 all and only all the data declared from the control unit 301.

Hereinafter the three operations performed by the control unit 301 are described in detail:

1) Receiving as an input the data output from the unit 100 along line E

Advantageously, the various records will be sorted by calling number (subscriber's ID), so as to create a set of record groups, wherein every record group is detected through the subscriber's ID and through the number of records related to that subscriber to input in memory.

2) Providing to the loading of the records in the memory unit 302

To understand in detail the loading modes, reference will be made to figure 8, showing the storing technique used. As the memory unit 302 must be very fast in terms of reading and writing, an N-level binary tree structure has been advantageously adopted. Each of the $2^N$ leaves 20 of the tree refers to a particular set of subscribers. To a generic leaf, wherein data related to a certain subscriber reside, a set of files 21 is associated, each related to a precise time interval corresponding to the billing period. Thus, there will be the first two months period file, the second two months period file and so on. These files will be organized as stacks, so that the first two months period be the last file, i.e., the one on the bottom of the stack. The file 22 on the stack surface (surface file) will be the one related to the most recent billing period, usually corresponding to the current one. If the current billing period has not ended yet, that file will be marked with the .TMP extension (temporary), as illustrated in the figure. At the moment of the billing period cut-off that file will be renamed erasing the .TMP extension and a new file .TMP will be created, as a new billing period will begin. All files within the stack will be organized as index files, so as to allow to know the indexes of the first and of the last records defining the single files.

To access to the various leaves 20 of the tree, and therefore to the pointer related to a set of particular subscribers, a technique of the "hash" type will be used. Then, to access to the single subscriber, a technique of the "key" type will be used.

If the access takes place during writing, new records taken from the network, i.e. new CDR's, are being input in the memory 302 of figure 7. In such a case, as the pertaining file is the one surfacing (of the .TMP type), no reorganizing of the previously inputted data will be required. In fact, the starting index of the file at the top shall have to be increased of an entity equaling the number of the records to input, keeping all other indexes (end of the surfacing file, start and end of the non-surfacing files) unchanged.

In case of access during reading, first of all it must be mentioned that such reading, i.e. the reading of the data from memory, usually concerns an entire analysis period. The access can concern solely the .TMP type files, should the analysis period be related only to the current billing period, or the first n files, should the analysis period be related to the last n billing periods, including the current one.

In any case, access during reading requires the extraction of one or more consecutive files. This will be performed by commands of the POP-UP type, corresponding to the reading instructions of all data comprised between start and end indexes. Thus, it will not be necessary to specify the record indexes one by one, as would instead happen in a normally structured database. For instance, the surfacing file extraction (usually the most frequent operation) is translated into machine language with an instruction like "read all records comprised between .tmp_start and .tmp_end indexes", instruction that can be performed by a MOVE command and not by a read and copy sequence.

3) <u>Outputting two control tables, contained in a memory unit 303</u>

A first table (Database Control Table) will describe the entire memory, while a second table (File Control Table) will describe only data that will be retrieved in the processing steps (sort routines and rating unit).

In particular, following an access in writing performed according to the above described modes, the DataBase Control Table will be updated through the updating of a table containing the path and the start- and end-file indexes for all the Database files.

With reference instead to the File Control table, this is generated by indicating the path in the binary tree (and therefore the path related to a certain subscriber) together with the start- and end-file indexes of the surfacing files, or, if needs be, of the further files in case more files are to be taken for the analysis of a longer period only for the subscribers concerned by the last CDR file fed from the unit 100.

The use of the File Control Table by the sort routines and by the rating units is particularly advantageous, as it allows the optimization of the machine time. In fact, it is apparent that in each processing process it will be crucial to calculate only the billing related to those subscribers that have developed a traffic or anyhow performed an event. For all those subscribers that have not developed any kind of action, the billing cannot have varied and thus the relative calculation will be pointless.

The use of the DataBase Control Table is devolved to the system administrator or in case to an automatic unit system.

The unit 302 could be implemented by a DataBase of the Oracle™ or Informix™ type. Although having the advantage of possessing a high stability in terms of resource allocation, there would be the disadvantage of having to operate with a very high memory access time, as every single record should be read, and the abovecited Move instruction would not apply.

On the other hand, by using the File System of the processor used the memory access time is remarkably reduced. In particular, the control and reallocation process consequent to the fragmentation problems is monitored by using the Data Base Control Table.

With further reference to figure 6, the unit 400 shall now be disclosed, receiving as an input the file sorted by unit 100 along line E. The unit 400 is made according to a generic structure as the one previously represented in figure 2. A more detailed structure thereof is represented in figure 9, to which reference will be made for sake of clarity. Figure 9 shows how the unit 400 comprises respective memory unit 401 and 403 and a rating unit 402. An operation completely similar to that of the unit 200 is carried out. The memory unit 401 is therefore such as to contain tables Tab4a and Tab4c similar to the respective tables Tab2a and Tab2c of the unit 200.

However, the operations of the unit 400 are adopted to a different service typology, according to several prices. In fact, if a service is switched by unit 100 to line E (or F) it is because this can be rated in different ways (i.e. with different unit prices), according to the tariff plans.

With reference to figure 9, a record contained in table Tab4b of memory unit 403 and a record inputted by unit 100 along line E are indicated with R3 and R4 respectively. Table Tab4a shown in unit 401 contains the unit prices according to the tariff plans for each code of the service provided.

The number of fields of record R3 depends on the number of the different prices applicable to a service contemplated by the unit 400 and on the number of different discounts referring to the telephone traffic as well as the different taxes referring to the telephone traffic devoted to each service processed by the unit 50 and by the subsequent units chained thereto. After having defined a generic service record fed by the unit 100 and inputted in the unit 400 with R4, the following four steps take place:

1) Reading of the input record R4, with user recognition (calling number or subscriber's ID) and recognition of the service code represented by the record itself;

2) Reading from memory Tab4b of record R3 related to the user in object;

3) Rating of the input record R4 according to different price parameters associated to the service (supposed in a number k) by k parallel and/or subsequent rating and updating operations of the R3 content according to the logical instruction R3 = R3 + R4;

4) Loading of the record R3 thus updated in table Tab4b.

A record sort of the input file for Calling Subscriber ID can be advantageously performed for the unit 400 as well, prior to the start of the processing, so as to reduce the memory accessing time, as already described for the unit 200.

The design of the record R3 depends on various factors, concerning aggregation rules determined by the control unit, as will be explained below. In particular, the number of fields contained inside the record R3 shall suffice to discriminate all the voices of telephone traffic interpretable unequivocally with the cost parameters of the tariff plan.

With further reference to figure 6, units 700 and 800 shall now be disclosed.

The unit 700 (sort routine unit) is a multiprocess system whose elements can be assembled dynamically, as a function of the sort logics deriving from the structures of the Tariff Plans and Services.

The steps of the sort process carried out by unit 700 are disclosed hereinafter:

1) Reading of the data from telephone traffic or of a single user related to the current billing cycle. The unit 700 retrieves such data from Data Base 302 following the reading of the table File Control Table of the unit 303.

2) Sorting of such data according to different logics, i.e. of the Time, Called Number type, etc. In case, a sort according to compound logics (e.g. F&F + Time) could be organized as well. In particular, the control of the logic typology that is to be adopted can be organized by a truth table wherein each logic typology (of the compound type or not) adopted is defined by a Boolean vector: the value 0 corresponding to a given logic typology (or to several given logic typologies) indicates the non-use of such logic typology for the sort, while the value 1 corresponding to a given logic typology (or to several given logic typologies) indicates the use of such logic for the sort. Therefore, the truth table can comprise any composition of the data aggregation chain.

For instance a process related to an analysis of the F&F + Time based type is taken into consideration. In particular, for F&F will be intended the user' possibility to choose three "friendly" numbers. That is, to apply an advantageous tariff to calls performed towards such numbers. The sort routine reads the user data contained in the Data Base 302 by use of the File Control Table and organizes such data according to the time duration.

| CDR IN UNIT 302 | | | | |
|---|---|---|---|---|
| Calling Number | Called Number | ....... | Time Start | Time Duration |
| A1 | B1 | ... | T1 | D1 |
| A1 | B2 | ... | T2 | D2 |
| A1 | B3 | ... | T3 | D3 |
| A1 | B4 | ... | T4 | D4 |
| A1 | B1 | ... | T5 | D5 |
| A1 | B3 | ... | T6 | D6 |
| A1 | B2 | ... | T7 | D7 |
| A1 | .... | .... | .... | ... |

In detail, the user data that will be taken into account are organized as follows, where time values related to the duration on peak and to the duration off peak were also considered:

**EP 1 035 724 A1**

| Calling Number | Called Number | ....... | Duration on peak | Duration off peak |
|---|---|---|---|---|
| A1 | B1 | ... | Aaa | bbb |
| A1 | B2 | ... | Ccc | ddd |
| A1 | B3 | ... | Eee | fff |
| A1 | B4 | ... | Ggg | hhh |
| A1 | B1 | ... | Iii | lll |
| A1 | B3 | ... | Mmm | nnn |
| A1 | B2 | ... | Ooo | ppp |
| A1 | .... | .... | .... | ... |

3) Elimination of the fields that are unnecessary to the process. With reference to the example considered, the following further table will be obtained:

| Calling Number | Called Number | Duration on peak | Duration off peak |
|---|---|---|---|
| A1 | B1 | Aaa | Bbb |
| A1 | B2 | Ccc | Ddd |
| A1 | B3 | Eee | Fff |
| A1 | B4 | Ggg | Hhh |
| A1 | B1 | Iii | Lll |
| A1 | B3 | Mmm | Nnn |
| A1 | B2 | Ooo | ppp |
| A1 | .... | .... | ... |

4) Summing of the records related to the same called number, so as to aggregate the data according to the following structure:

| Calling Number | Called Number | Duration on peak | Duration off peak |
|---|---|---|---|
| A1 | B1 | (Aaa+Iii) | (Bbb+Lll) |
| A1 | B2 | (Ccc+Ooo) | (Ddd+Ppp) |
| A1 | B3 | (Eee+Mmm) | (Fff+Nnn) |
| A1 | B4 | Ggg | Hhh |
| A1 | .... | .... | ... |

5) Rating ("rated service" column) the traffic voices to evaluate the maximum values and to be able to sort the table previously obtained.

| Calling Number | Called Number | Rated service |
|---|---|---|
| A1 | B1 | $1 |
| A1 | B2 | $2 |
| A1 | B3 | $3 |
| A1 | B4 | $4 |
| A1 | .... | .... |

6) Sorting the voices thus rated, for increasing or decreasing values.

In the example at issue, it is assumed that $3 > $1 > $2 > $4 > .... The table related to the user's traffic will therefore be sorted as follows:

| Calling Number | Called Number | Duration on peak | Duration off peak |
|---|---|---|---|
| A1 | B3 | (eee+mmm) | (fff+nnn) |
| A1 | B1 | (aaa+iii) | (bbb+lll) |
| A1 | B2 | (ccc+ooo) | (ddd+ppp) |
| A1 | B4 | Ggg | hhh |
| A1 | .... | .... | ... |

7) Selection of the records (the first three in this case) constituting the best F&F for the user at issue:

| Calling Number | Called Number | Duration on peak | Duration off peak |
|---|---|---|---|
| A1 | B3 | (eee+mmm) | (fff+nnn) |
| A1 | B1 | (aaa+iii) | (bbb+lll) |
| A1 | B2 | (ccc+ooo) | (ddd+ppp) |

This table will be read by the subsequent unit 800 for the application of the discounts on records related to the optional service F&F.

The unit 800 is responsible of the application of the optimal services, obtained statistically by the unit 700, so as to modify the records outputting from the unit 400 on the basis of such parameters.

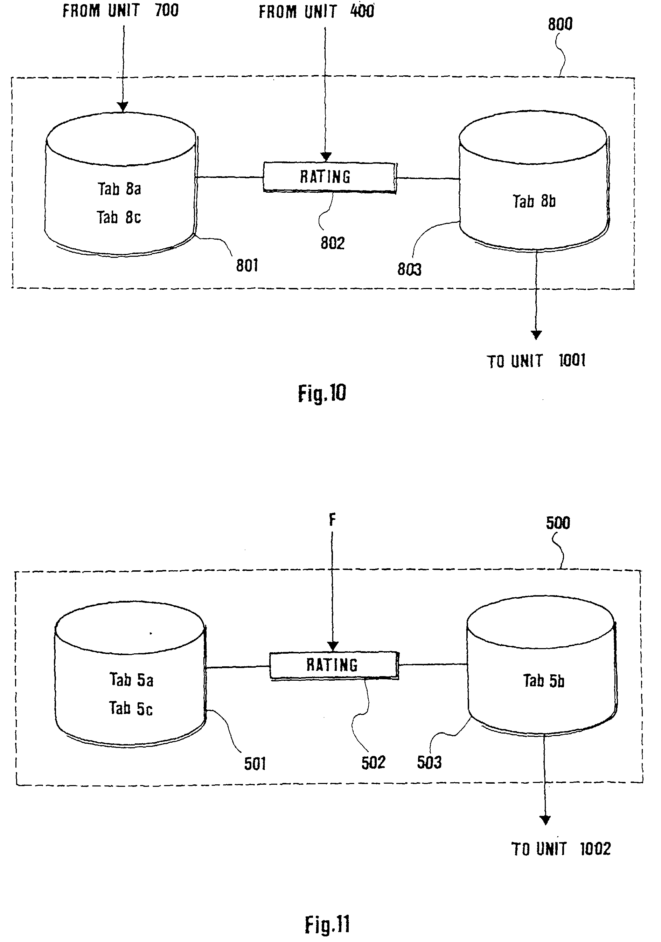

The unit 800 is made according to a generic structure as the one previously represented in figure 2. A more detailed structure of the unit 800 is represented in figure 10, to which reference will now be made for sake of clarity.

Figure 10 shows how the unit 800 comprises respective memory units 801 and 803 and a rating unit 802. Data input to rating unit 802 are retrieved from Table Tab4b of the memory unit 403 of the unit 400.

An operation similar to that of the unit 400 is performed. The memory unit 801 therefore is such as to contain tables Tab8a and Tab8c similar to the respective tables Tab4a and Tab4c, while the memory unit 803 contains a table Tab8b similar to the table Tab4b.

The task of the unit 800 is that of updating the values determined by the unit 400 and contained in the memory unit 403, regenerating new records R5, to be stored in the table Tab8b contained in the memory unit 803.

The parameters contained inside the memory unit 801 have been selected by the above described unit 700. In particular, it has already been explained how the sort routines detect the optimal values of the statistical parameters through the use of the traffic (related to entities of a physical as well as of an economic type), providing those results to the memory unit 801.

In order to better understand the working modes of the unit 800, an example will be illustrated hereinafter.

It shall be now assumed to have two tariff plans for all the services input in the unit 50 along line E, wherein each plan is such as to have, for ease of explanation, the same discount and taxation parameters. The number of fields of each record R3 generated by the unit 400 is equal to 3 (one field related to the user ID, one field related to the first tariff plan and one field related to the second tariff plan).

It shall be now assumed the only statistical service (and therefore the only parameter contained inside of memory unit 801) to be the F&F, that allows to rate all the calls of a set of "friendly numbers" at a price pf, in line with what has been already illustrated in the previous example. The price of the services related to the first tariff plan and those related to a second tariff plan shall now be indicated with p1 and p2 respectively (with p1 and p2 > pf). Now it can be assumed for sake of simplicity that all the services inputted in the chain E are single-price with respect to the tariff plan. The set of records R3 outputting from the unit 400 (contained in the memory unit 403) will be of the type illustrated in table below.

| Subscriber ID | Total 1 | Total 2 |
|---|---|---|
| Xxxx1 | $ 1,1 | $ 2,1 |
| ............ | ............ | ............ |
| XxxxN | $ 1,N | $ 2,N |

Assuming now that the output of the unit 700 indicates a total of seconds of talking with the F&F optimal numbers, the following set of records will be obtained:

| Subscriber ID | F&F Set | Total Time |
|---|---|---|
| Xxxx1 | ##### | Txxxx1 |
| ............ | ............ | ............ |
| XxxxN | ##### | TxxxxN |

To the record R3 input to the unit 800 and rated with the full prices "p1" and "p2", a discount rate shall be subtracted, due to the fact that the price of the F&F service is cheaper than the full price.

The unit 800 will receive as an input the above described records, applying the discounts at the record level (the F&F is related to the single call, i.e. to the record) as from the following logical relation that will be stored in table Tab8b of memory unit 803:

$$\$^\circ 1,1=\$1,1-(p1-pf)*txxxx1 \quad \$^\circ 2,1=\$2,1-(p2-pf)*txxxx1$$

$$\$^\circ 1,N=\$1,N-(p1-pf)*txxxxN \quad \$^\circ 2,N=\$2,N-(p2-pf)*txxxxN$$

It is now supposed that the F&F service requires a monthly fee, assumed to be not taxable. Both the normal telephone traffic comprising the F&F service and the normal telephone traffic without the F&F service shall have to be rated (by units 1210 and 1220, disclosed below) in order to assess the optimal value. Hence, the record to be stored in the unit 803 will have to indicate a first total $ as well as a second total $° therefore taking the following form

| Subscriber ID | Total1 | Total2 | Total1° | Total2° |
|---|---|---|---|---|
| Xxxx1 | $1,1 | $2,1 | $°1,1 | $°2,1 |
| ............ | ............ | ............ | ............ | ............ |
| XxxxN | $1,N | $2,N | $°1,N | $°2,N |

In brief, the unit 800 receives as an input two distinct types of record:

1) The records R3 contained in the memory Tab4b generated by the unit 400, indicating the total value of the user's traffic according to the "full prices" of the tariff plans configured. This concept of the full prices identifies a "price record level", i.e. a taxation referring to a telephone traffic service, i.e. associated to a telephone transmission; and

2) The records generated by the sort routines and contained in table Tab 8a of the memory unit 801, indicating the optimal values of the parameters possibly selectable by a user's choice (like the F&F), the use in terms of traffic or towards the same users and the discount coefficient. These values indicate a "discount record level", i. e. a discount referring to telephone traffic service, i.e. associated to a telephone transmission.

Therefore, the unit 800 updates the input records of the first of the aforesaid types adopting the input records of the second type as updating parameters. The results thus generated will be stored in the table Tab8b of the memory unit 803.

The design of the record in the table Tab8b depends on the control unit. Should the case in which the (above disclosed) condition that the F&F service requires a fee occur, for which the design of the record disclosed hereinafter is required,

| Xxxx1 | $1,1 | $2,1 | $°1,1 | $°2,1 |
|---|---|---|---|---|

it can be remarked that the system tends to generate redundant information. In fact, the values $ are repeated, as they are stored in the memory Tab4b of the unit 403 as well as in memory Tab8b of the unit 803. It is apparent that such redundancy can advantageously be eliminated by erasing one of the redundant information. In particular, such a control type is managed by the control tables Tab8c which control the data production processes. Similarly to what disclosed for the previous units, a marker is associated to each service of the table Tab8c, indicating the record field of the table Tab8b that is to be updated. The tables Tab8c, contained in the unit 801, can be updated dynamically through the control unit.

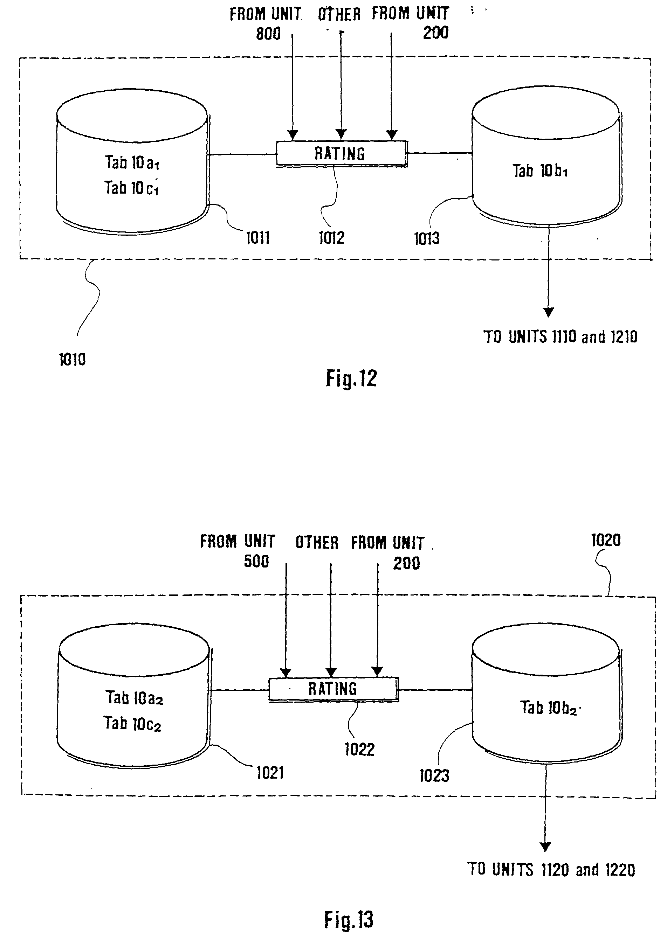

Reference will now be made to figures 4 and 11, so as to describe the unit 500. In particular, figure 11 is a detailed diagram of such unit.

In the unit 500, and in the units chained thereto, all and only those CDR's having several economic interpretations according to the tariff plan declared by the user shall be processed, comprehensive of basic and optional services (e.g. a set of F&F numbers declared by the user). Therefore, it will not be necessary to detect the optimal parameter, as the various parameters will have already been defined by the user when drawing up the contract.

The unit 500 is responsible of the taxations referred to a traffic service (pricing record level) using in particular the reference plan chosen by the user when drawing up the contract with the telephone company. In this case as well, for each single record CDR of the input file input from the unit 100, every possible "full price" is applied, compatibly with the discounts (when known) that were actually declared by the user.

Usually, in a drawn up contract reference to two separate entities is made: Tariff Plan for the basic and for the optional services (e.g. of the F&F type). It is now assumed that the user stated to choose a certain Tariff Plan for some basic services, also declaring a set of F&F numbers (optional services). It is also assumed that the Tariff Plan is not based on the "Local Area" and therefore the F&F numbers selected by the user accordingly to the tariff plan cannot be adopted.

It can be imagined that among the various tariff plans there is a "Local" plan. From the unit 800, that determined the "Best Local Area" by use of the above described sort routines, the code thereof is advantageously fed to the unit 500 so that the input records be processable even according to this option, though continuing to use the declaration of the same user (F&F). See in this regard the connection between unit 50 and unit 500 in figure 4 and the connection between unit 800 and unit 500 in figure 6. Therefore, the unit 500 applies for every basic service the variety of the parameters provided by all the tariff plans, while it applies for the optional services those chosen by the user in the reference plan.

The unit 500 is made according to a generic structure as the one previously represented in figure 2. A more detailed structure of the unit 500 is represented in figure 11, to which reference will now be made for sake of clarity.

Figure 11 shows how the unit 500 comprises respective memory units 501 and 503 and a rating unit 502. Data input in the rating unit 502 are the data output from the switching unit 100 along line F.

In this case as well, the table Tab5a, contained in a memory unit 501, contains all the prices related to the basic services for all the tariff plans and moreover contains (when known) the configurations of the optional services chosen by the user. In the table Tab5b contained in the memory unit 503, the results of the rating operation performed on the data input in the unit 502 are shown, in this case intended as well as the update of a value by a summing operation. Also for the unit 500 a control table Tab5c is provided, contained in the memory unit 501, for which table the record field of the table Tab5b to update is indicated beside each service. The control table Tab5c is generated and dynamically varied by the control unit, as is the case for the other processes.

In case of information redundancy among the tables Tab5b, Tab4b and Tab8b a control process, advantageously generated by the control unit, will provide the minimization of the information duplication.

With reference again to figure 4, the units 1010 and 1020 shall now be described in greater detail.

The units 1010 and 1020 are second level units, apt to perform processing operations on the traffic volume, as evidenced by the caption <u>VOLUME</u> of figure 4. In particular, the discount parameters related to the volume of telephone traffic are calculated.

The unit 1010 receives as an input data outputted from the units 50 and 200, while the unit 1020 receives as an input data outputted from the units 500 and 200.

The unit 1010 will calculate the discount parameters on the optimal volumes, while the unit 1020 will calculate the discount parameters on the volumes that can actually be adopted, based on the contract drawn up by the user. To the ends of performing a processing on the total volume, the unit 1010 will receive as an input both the data related to the chain E (output from the unit 50) and the data related to the chain D (output from the unit 200). Likewise, the unit 1020 will receive as an input both the data related to the chain F (output from the unit 500) and the data related to the chain D (output from the unit 200).

Figures 12 and 13 show a more detailed representation of the respective units 1010 and 1020.

Figure 12 shows the memory units 1011 and 1013 and a rating unit 1012. The memory unit 1011 comprises tables Tab10a1 and Tab10c1. The memory unit 1013 comprises a table Tab 1 Ob 1. The rating unit 1012 receives as an input the records outputted from the units 200 and 800, together with possible taxable volume costs not proportional to the traffic, indicated with the caption "other".

Figure 13 shows memory units 1021 and 1023 and a rating unit 1022. The memory unit 1021 comprises tables Tab10a2 and Tab10c2. The memory unit 1023 comprises a table Tab10b2. The rating unit 1022 receives as an input the records output from the units 200 and 500, together with possible taxable volume costs not proportional to the traffic, indicated with the caption "other".

The records input to the units 1010 and 1020 express the total volume of traffic of the clients, rated according to different criteria. This rated total can be easily reconverted in terms of a physical entity (number of seconds, bytes etc.) and therefore a possible existing "volume level pricing" will be easily applicable instead of the record level pricing adopted so far.

Thus, all the information needed to apply the volume level discount is available. It has to be noted that the discounts on the record were already adopted by the aforeconsidered units.

In the tables Tab10a1 and Tab10a2, contained in the respective memory units 1011 and 1021, it exists a code list of the services to which the respective discount parameters are applied.

It has to be noted that, while up to the preceding steps the discount or price parameters were related to the services intended as physical events, now for service any element to which a separate discount voice is associated is intended. For instance, if both the national voice and the voice mail result as having a 15% discount on the total volume, then it is possible to aggregate the two physical events in a single total and therefore reference is not made to a "physical" event anymore, but rather to a "15% discount" event.

The aforementioned aggregation has already been performed in the preceding units (by the design of the record in the result tables). However, it must be pointed out that at this level of the process the concept of physical event has been discarded in favour of the accountable item.

The pairs of tables Tab10a1-Tab10a2, Tab10b1-Tab10b2, Tab10c1-Tab10c2, can also be considered as single tables Tab10a, Tab10b, Tab10c, in which a marker is shown indicating the type of record to which the parameters are to be applied, i.e. if it is a case of records output from the unit 500 or records output from the unit 800.

In the tables Tab10a (or Tab10a1 and Tab10a2) there will be the discount codes (all the different values provided by the tariff plans), together with two further markers indicating the record fields of the tables Tab8b and Tab5b where these discounts will have to be applied. The results will be stored in a way totally similar to what was performed for the preceding units in a table Tab10b (or Tab10b1 and Tab10b2). In this case as well the table Tab10c (or Tab10c1 and Tab10c2) controls the design of the records in the result tables, according to the controlling action performed by the control unit.

With reference to figure 4, the units 1110 and 1120 shall now be described in greater detail.

The units 1110 and 1120 are third level units, performing processing operations on the taxation parameters. Therefore, these units receive as an input the records rated by the preceding level and will apply all the taxes provided for by the law.

The unit 1110 receives as an input the data output from the unit 1010, while the unit 1120 receives as an input the data output from the unit 1020.

In particular, the unit 1110 will calculate the taxation parameters based on optimal data, while the unit 1120 will calculate the taxation parameters based on the data referring to the contract drawn up by the user.

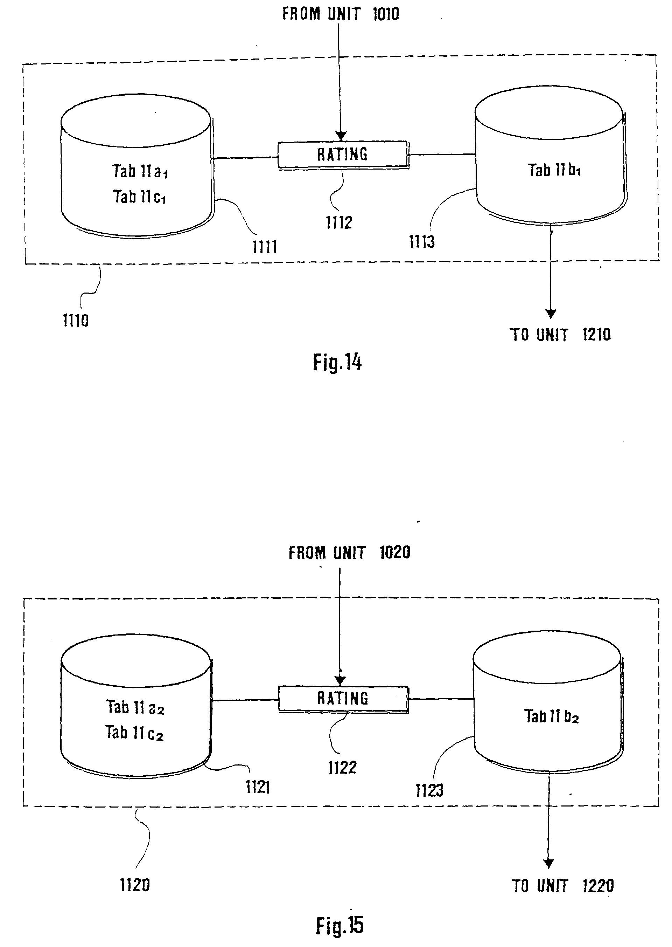

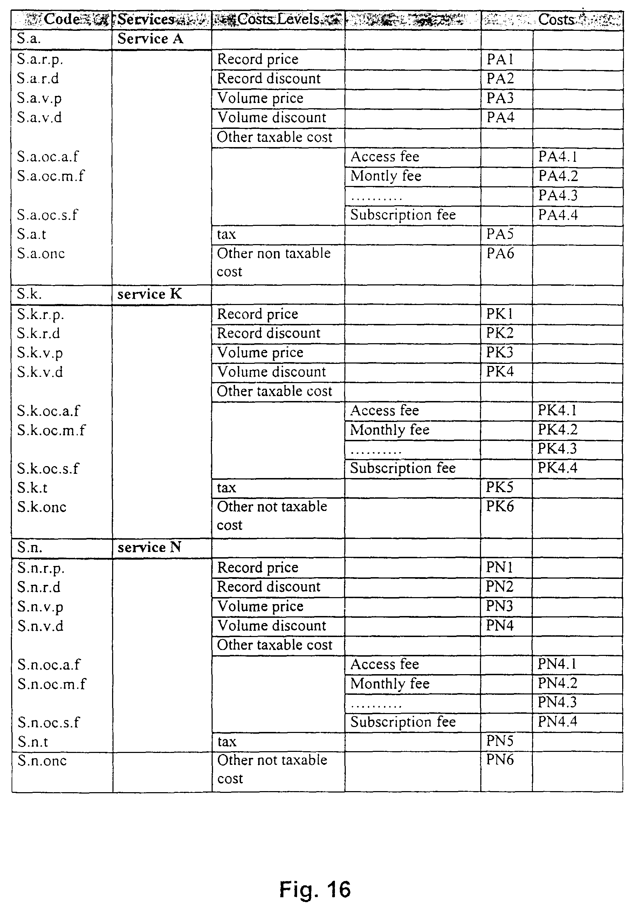

Figures 14 and 15 show a more detailed representation of the units 1110 and 1120, respectively.

Figure 14 shows memory units 1111 and 1113 and a rating unit 1112. The memory unit 1111 comprises tables Tab11a1 and Tab11c1. The memory unit 1113 comprises a table Tab11b1. The rating unit 1112 receives as an input the records output from the unit 1010.

Figure 15 shows memory units 1121 and 1123 and a rating unit 1122. The memory unit 1121 comprises tables Tab11a2 and Tab11c2. The memory unit 1123 comprises a table Tabllb2. The rating unit 1122 receives as an input the records outputted from the unit 1020.

The structure and the operation modes of the units 1110 and 1120 are similar to those of the respective units 1010 and 1020, with the only difference that the cost parameters will be tax-related and not discount-related.

In particular, the unit 1110 will receive as an input the results of table Tab10b1 and the unit 1120 will receive as an input the results of table Tab10b2.

With reference again to figure 4, the adding units 1210 and 1220 shall now be described in greater detail.

The adding units 1210 and 1220 are fourth level units, advantageously performing adding operations on the data received through the outputs of the units 50, 1010 and 1110 and respectively 500, 1020 and 1120.

Therefore, such adding units receive as an input the rated total traffic (output of the units 50 and 500), the total discount (output of the units 1010 and 1020), the total taxes (output of the units 1110 and 1120), possible not taxable costs per event ("other" voice) and, on the basis of such input data, calculate the final record bills according to the simple relation Bill=[(Traff+Tax+Other)-Disc].

Actually, the adding unit is to be intended as a logical entity and not as a physical entity. This means that the sum of the values reported above might occur at the fourth level, as well as being distributed to the preceding levels, according to different modes, advantageous from case to case.

To each of these adding units, a memory unit is associated, comprising tables, Tab12b1 and Tab12b2 respectively, wherein the various sum records thus obtained are stored. In particular, for each record (optimal or real) a specific profile compatible with a certain existing contract will be used, consisting of a basic service plus an optional service.

The inputs coming from the chain generated by the data coming along line E are those determined by the sort routines and therefore optimal under the point of view of the traffic. It cannot be said that the same are optimal under the point of view of the cost, and hence of the bill, because the activation cost thereof is provided by unit the 1010 or by the unit 1210 (depending on whether those costs are taxable or not). This does not mean that the statistical parameters are not optimal, it means instead that it is not known whether it is convenient for the user to activate the optional services or not and that, should he have to do so, the optimal values are those determined during the processes related to the data fed along line E.

Once the respective units 1210 and 1220 have performed the sums (or anyhow performed by sums at higher levels), an optimum operation shall have to be performed, calculating the lowest rating on the basis of the data thus calculated.

Such optimum operation shall be carried out inside of the fifth level unit 900.

The unit 900 is responsible for the detection of the best bill. Such unit receives as an input a series of multiple-field records, wherein each record identifies a certain customer and the set of the fields of each record is related to the number of different tariff plans adopted.

Considering for instance the record

| CUST_ID | BILL1-PT1 | BILL1.1-PT1+F&F | BILL2-PT2 | BILL2.1-PT2+ F&F |
|---|---|---|---|---|

this is composed of five fields: the first field indicates the user's ID, the second field indicates the bill value calculated by associating the tariff plan 1, the third field indicates the bill value associating the tariff plan 1 and taking into consideration the F&F conditions, the fourth field indicates the bill value associating the tariff plan 2, the fifth field indicates the bill value associating the tariff plan 2 and taking into consideration the F&F conditions.

The basic functions related to the unit 900 are the calculation of the minimum tariff concerning single accounts, as well as the calculation of the minimal tariff concerning multiple accounts (the so-called "large accounts").

A further function of the unit 900 is that of taking into account discounts on the tariff plans, where the discount applicability depends on the economical amount accrued and its value is independent therefrom (assuming for instance that a discount of ITL 200,000 is allowed when the total amount is more than ITL 1,000,000), i.e. the application of a default discount in the case where the bill total value fulfills some conditions (e.g. value higher than a predetermined entity). Such cost voices (usually discounts) taken into account by unit 900 are not proportional to the realization of events, regardless of their being expressed in a rated or instead in a physical form, and have to be considered as a further calculation parameter.

To make the unit 900 capable of taking into consideration both the "large account" and the abovementioned function, the selection of an appropriate optimization method becomes important, in order to reduce the machine time as much as possible. In fact, indicating with n the number of the input record fields (i.e., apart from the field related to the user ID, the number of the possible bills that can be associated to a user) and with k the number of the users constituting a "large account", the number of possible bills that can be associated to a large account equals $n^k$. Therefore, over such number of bills the abovementioned discount applicability shall have to be verified, the discount itself adopted in the cases considered, and lastly the lowest rating detected.

Thus, in case of a single user the steps adopted by unit 900 shall be as follows:

1) The applicability of the default discount is verified for each field of a record;
2) Once such fields are detected, the default discount is adopted thereon;
3) The lowest rating is detected among all the fields of the record (span routine).

In case of a large account the steps that ought to be adopted with an exhaustive process adopting no optimization algorithm would instead be as follows:

1) All the combinations among the possible bills for a large account are detected, generating an $n^k$ fields record associated to the one in charge of the large account. Each field contains the bill value obtained as the sum of all the costs related to all the services used by all the group components;
2) For each field of the record the applicability of the default discount is verified;
3) Once such fields have been detected, the default discount is applied thereon;
4) The lowest rating is detected among all the fields of the record (span routine).

It is apparent that such a procedure would entail an exponential complexity ($n^k$).

To reduce this complexity, in the annex at the end of the present description an application is illustrated using the simplex method, providing in particular a filtering function which allows to generate only the useful combinations (descending directions), so as to reduce the exponential complexity ($n^k$) of the problem to a linear complexity ($n*k$).

The control unit of the system according to the present invention, already mentioned several times, shall be described hereinafter.

A first task of said unit is that of managing the working "front-ends" that configure the system from the functional point of view, thus providing an access point for the operators in charge. For instance, an operator in charge may have predefined displaying modes, through which a service can be configured, and to which a price, discount, taxes etc. voice can be assigned. The steps that can be performed through the front-end section can be for example:

- Services configuration;
- Tariff plans configuration;
- Creation of a contract and association of a Tariff Plan to a contract;
- Activation, interruption, deactivation of services, tariff plans and contracts;
- Management of events relating to the contract and concerning the billable amount;
- Query;
- Memory and process control.

The main task of the control unit is anyhow related to the configuration processes of the Data Base related to the Tables Tabxa, Tabxb, Tabxc described in the course of the present description.

With the term configuration of a Data Base, the detection of its logical scheme and the dimensioning of all the tables thereof is intended. With the term logical scheme, the set of the Relation Tables is intended (allowing the various associations among the information) and the assignation of all the keys. Hence, the logical scheme is the one allowing the "navigation" inside the data base in order to reach the data.

The modes by which the automatic design of the Data Base Tables is carried out by the control unit will be illustrated hereinafter.

In particular, the control unit allows to detect dynamically the table designs in order to minimize the dimension of the memory required by the entire system. Firstly, the generation of the control table Tab1c related to the switching unit 100 shall be described.

With reference to figure 16, the structure of a generic tariff plan is shown.

Once the structure of figure 16 has been adopted, the construction of a grid containing the prices ID is simple. As it can be noted, each service included in the tariff plan is described in terms of price using an homogeneous structure. Hence, the number of the cost parameters of the "voice" service equals the number of the cost parameters of the "SMS" service.

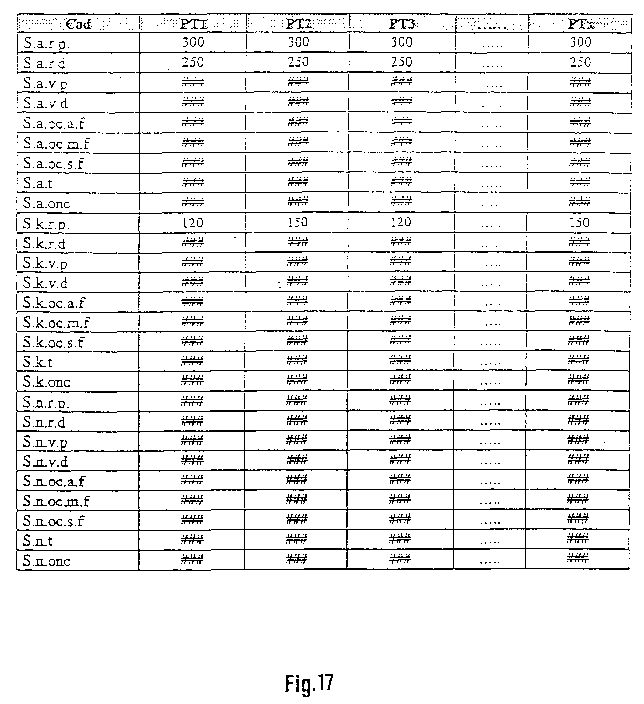

The cost parameters grid is introduced in figure 17, wherein with #### a numerical value or a formula and with PTi the generic tariff plan is intended.

Through subsequent horizontal XOR operations, it is verified whether the record-referred parameters (S.a.$\underline{r}$.p, S.a.$\underline{r}$.d, S.k.$\underline{r}$.p., S.k.$\underline{r}$.d., etc.) assume or not the same value for all the tariff plans. The XOR operation applied to the S.a.r.p parameter returns for instance the value 0, as this parameter takes the same value in all the tariff plans, while applied to the S.k.r.p parameter returns the value 1, as the parameter can be 120 or 150, hence assuming different values.

Therefore, the generation process of Table Tab1c comprises the following steps:

1) XOR operation (with x operands, figure 17) for each record-related parameter, i.e. with a S.x.$\underline{r}$.x code structure;
2) Verification, for every S.$\underline{x}$. service, that all the results of the XOR operation applied to it are 0, by the logical query instruction S.$\underline{x}$.r.p.+S.$\underline{x}$.r.d=0 ;
3) If the query instruction of step 2) is true, then the code of the service (i.e., S.x.) and the result of the query sum (i.e., 0) are written in table Tab1c;
4) If the query instruction of step 2) is false then the code of the service (i.e., S.x.) and the result of the query sum (i.e., 1) are written in table Tab1c.

The table Tab1c shall therefore assume the form

Tab1c

| | |
|---|---|
| S.a | 0 |
| S.k | 1 |
| ... | |
| ... | |

Tab1c (continued)

| S.n. | ### |
|------|-----|

Therefore, the unit 100 of figure 4 reads, for each record generated from the network, the code of the service (S.x.) and enters a table reading the related marker. If the value of such marker is 0, then the record will be fed along line D, if the value is 1 then it will be fed along lines E and F.

Each time any user enters the grid of figure 17 in writing (therefore a potential modification is being performed) the generation process of table Tab1c will be automatically re-executed (by a command from the operating system that has loaded the "write" instruction). This happens every time a new service or a new tariff plan is inserted, or every time a parameter value is modified.

The subsequent operations of the control unit concern the design of the records of tables Tabxc of the units having a level lower than the level of the switching unit 100.

Starting from the grid of figure 17, a sub-grid is extracted. In particular, such sub-grid does not comprise the cost centers that are not proportional to the traffic such as the Monthly fee, the Subscription fee etc. The insertion of such values, assumed not to be taxable, in the bill calculation will take place in the adding units 1210 and 1220, as better explained hereinafter.

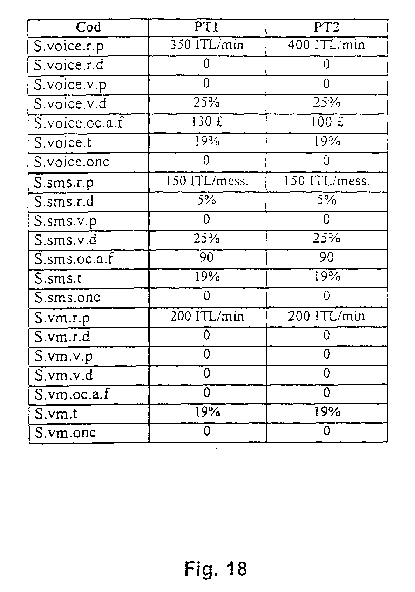

Thus, it is assumed to obtain an exemplifying table as the one represented in figure 18, in which two tariff plans (PT1 and PT2) and three services (Voice, SMS and Voice Mail) are shown. It is further supposed that at the moment no optional service that may be configured by the user exists (i.e. of the F&F type).

The table of figure 18 shows that for the "Voice" service of PT1, the cost (S.voice.r.p) is of ITL 350/minute, the discount rate on the single call (S.voice.r.d) is 0, the volume price (S.voice.v.p) is 0 (there is no default price), the discount rate on the total expense (S.voice.v.d) is 25%, the on-call answer fee unit (S.voice.oc.a.f) costs ITL 130, the taxes (S.voice.t) are 19% and the value of other not taxable costs (S.voice.onc.) is 0. Similar descriptions are valid for other services with respect to the PT2.

Still referring both to the "voice" service and to figure 4, it can be noted how the (S.voice.r.p), (S.voice.r.d), (S.voice.oc.a.f) parameters can be applied to the first level processing units 200, 500 and 50 (in particular the unit 400 of the latter) that are actually record-referred.

The (S.voice.v.p), (S.voice.v.d) parameters can instead be applied to the second level volume-referred units 1010 and 1020.

The (S.voice.t) parameter can be applied to the third level tax-referred units 1110, 1120. Finally, the (S.voice.onc.) parameter can be applied to the fourth level adding units 1210, 1220 as it represents a non taxable cost type.

Therefore, it can be noted how a generic service contributes to the calculation of the final bill by a "path" among four levels.

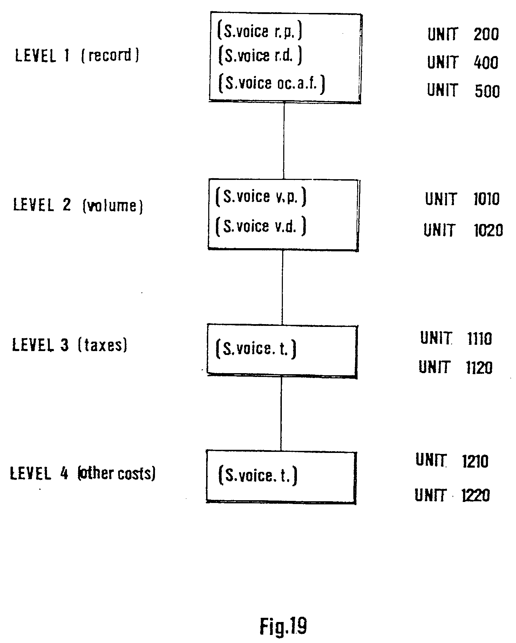

In the next figure 19 a generic path among levels for the voice service is reported, wherein for each level the parameters influencing it are specified.

Such path, sketched by way of example for the "voice" service, can be expressed for every service and identifies the calculation parameters contained in tables Tab2a, Tab4a, Tab5a for level 1, Tab10a1, Tab10a2 for level 2, Tab11a1, Tab11a2 for level 3.

For level 4 an input of the "other" type has been provided, coming directly from the Data Base, to the units 1210 and 1220, not linked to the traffic.

Firstly, some geometrical concepts will be introduced, and then reference will be made to a numerical example referring to what illustrated in figures 18 and 19.

1) A "j" level "node" is defined as a distinct and admitted combination of "j" level parameters. A combination is admitted when declared by a Tariff Plan. The nodes are disjointed, in the sense that two different nodes of the same level may not contain the same parameter combination. A generic level "j" is defined by the set of nodes associated thereto.

2) An arc which is "incident" in a node "with respect to a service" is defined as the association among the parameters characterizing the node, such parameters pertaining to that service according to a tariff plan.

3) A "grade" of "a service k with respect to a level j" is defined as the number of the arcs of the service k which are incident in the set of the nodes of the level j.

4) A "dimension" of a service "k" is defined as the highest grade of the service "k" with respect to all the levels "j".

5) A "path of a service k with respect to a tariff plan r" is defined as the sequence of arcs and nodes crossed by the service "k" according to the parameters of the tariff plan "r".

6) A "configured forest" is defined as the set of the paths traced for all the services with respect to all the tariff plans. The forest is called configured because it has been designed with the Tariff Plans configured in the System.

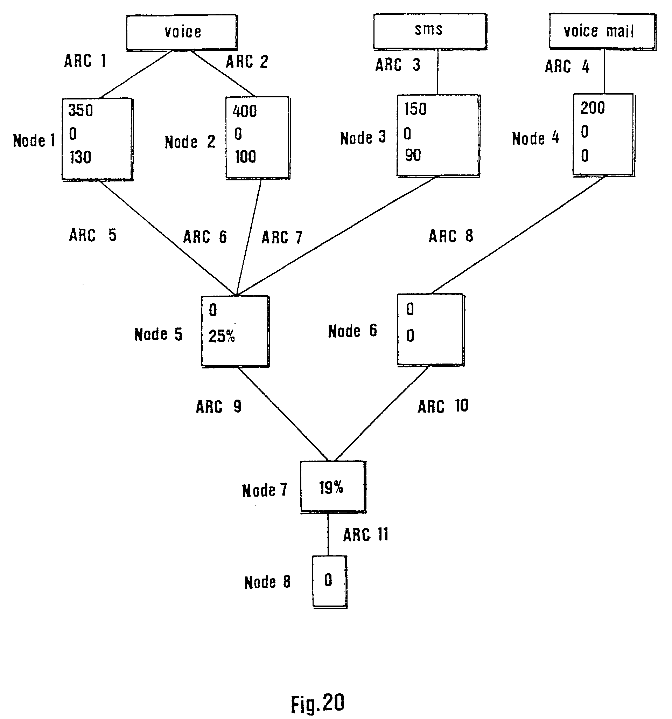

In the next figure 20, the forest configured with values of the preceding figures 18 and 19 is shown.

From the analysis of the forest it follows that the grade of the voice in levels 1 (arcs 1 and 2) and 2 (arcs 5 and 6) equals 2, while in levels 3 (arc 9) and 4 (arc 11) equals 1.

Therefore, the voice dimension equals 2. The path of the voice with respect to the tariff plan 1 is given by the sequence (arc1,node1,arc5,node5,arc9,node7,arc11,node8). The path of the voice with respect to the tariff plan 2 is given by the sequence (arc2,node2,arc6,node5,arc9,node7,arc11,node8).

From the analysis of the forest it follows that the SMS grade in levels 1 (arc 3), 2 (arc 7), 3 (arc 9) and 4 (arc 11) equals 1. Therefore, the SMS dimension equals 1. The path of the SMS with respect to the tariff plan 1 is given by the sequence (arc3,node3,arc7,node5,arc9,node7,arc11,node8). The path of the SMS with respect to the tariff plan 2 is the same of the tariff plan 1. In fact, this condition is consistent with the SMS dimension that equals 1.

From the analysis of the forest it follows that the grade of the voice mail in levels 1 (arc 4), 2 (arc 8), 3 (arc 10) and 4 (arc 11) equals 1. Hence, the voice mail dimension equals 1. The path of the voice mail with respect to the tariff plan 1 is provided by the sequence (arc4,node4,arc8,node6,arc10,node7,arc11,node8). The path of the voice mail with respect to the tariff plan 2 is the same of the tariff plan 1. In fact, this condition is consistent with the voice mail dimension, which equals 1.

From the abovementioned, a first partial result is obtained, that shall be defined hereinafter as "Conclusion 1: Horizontal Aggregation": the format of the record needed for the representation of the service "j" valid for "all levels" of the "configured forest" provides a number of fields equaling the "service dimension" plus in case a field necessary for the code of the service itself.

This conclusion is called of horizontal aggregation because it enables to replace more records representing the same service (in a number equaling the number of the tariff plans) with a single multi-field record (in a number equaling the service dimension). Moreover, for each level it exists only one association between a tariff plan and a field of the record. This association is not biunivocal, in the sense that in general to a field of a record cannot be associated only a single Tariff Plan. The horizontal aggregation can be represented geometrically by a projection of the Set of the tariff plans onto the Set of the fields of the record.

This projection is loaded in a partial table provided for the purpose, indicated hereinafter with the term Concl1. Such table shall indicate for every level and for every service which is the record field where the Tariff Plan has to act.

| Concl1 | | |
|---|---|---|
| Service Code | PT1 | PT2 |
| Voice | 1 | 2 |
| SMS | 1 | 1 |
| Voice mail | 1 | 1 |

For instance, it can be noted how the value "1" of the Voice code under the PT1 column indicates that the first field of the Voice code is related to the Tariff Plan 1, while the value "2" of the Voice code under the PT2 column indicates that the second field of the Voice code is related to the Tariff Plan 2.

From conclusion 1, it follows that the minimum required record, taking into account the service ID code as well, is a three-field record for the voice, a two-field record for the SMS and, lastly, a two-field record for the voice mail. Conclusion 1 provides a design rule of the record that is valid in the hypothesis wherein every service is represented by a dedicated record thereof.

Moreover, conclusion 1 introduces a further concept, defined hereinafter with the term "Vertical Aggregation". For instance, the voice service will be taken into consideration. A record coming from the network and representing the voice shall be transformed inside the system into a two-field record (disregarding the field related to the code of the service for the sake of simplicity). Such two-field record suffices to represent the voice service in all the levels of the system. One of such levels is the one related to the Volume of traffic, and therefore what reported is tantamount to say that the single record taken from the network representing a single "voice" telephone call shall update a record representing the total of the "voice" telephone calls, thus obtaining an aggregation of the vertical type, i.e. intended as the sum of all the single voice records.

This last observation, done for the "voice" service as a whole can be easily extended to all the services through simple processings of a geometrical type.

Two further geometrical definitions, 7) and 8) shall now be provided:

7) A "Complete Terminal Sub-path" is defined as a contiguous sequence of arcs and nodes ending with a last level node (node 8 of figure 20 in the example) and in which two subsequent nodes pertain to two consecutive levels (level n and level n+1).

8) A "Complete Admitted Intersection" is the definition of a complete terminal sub-path generated by a node obtained from the intersection of two complete terminal sub-paths whose initial arcs are distinct.

Continuing to make reference to the example adopted hereto, it was said with reference to the SMS that the single path associated thereto (as the SMS grade equals 1) is (arc3,node3,arc7,node5,arc9,node7,arc11,node8). A complete terminal sub-path is given for example by (arc9,node7,arc11,node8) because node 8 pertains to the terminal level (level 4) and moreover nodes 7 and 8 pertain to two consecutive levels (level 3 and 4).

Now the paths related to the SMS and to the voice mail writing them in column according to what represented are again taken into consideration:

| SMS | (arc3,node3,arc7,node5,arc9,<u>node7,arc11,node8</u>) |
| voice mail | (arc4,node4,arc8,node6,arc10,<u>node7,arc11,node8</u>) |

It can be seen that the voice mail and the SMS generate a "Complete Admitted intersection" given by the sequence

(<u>node7,arc11,node8</u>)

Thus, it can be easily understood that the records related to the SMS and to the voice mail can be summed in the node 7 because both are subject to the same operations with the same parameters from the node 7 onwards. In fact, it is apparent that in the node 7 the SMS record is multiplied by 0,19, while in the node 8 this result is added to 0. In the node 7 the voice mail record is multiplied by 0,19, while in the node 8 this result is summed to 0. The summability of the SMS and of the voice mail records in the node 7 is thus apparent, given the distributive and the associative properties of the product and of the sum.

Reference will now be made instead to the dimension of such sum record. In the case of the SMS and of the voice mail the dimension of the sum record is apparent, as they both have the same dimension, equal to 1.

The more complex case of the voice and SMS services, first of all writing again their paths, shall instead be taken into consideration:

| SMS | (arc3,node3,arc7,node5,arc9,node7,arc11,node8) |
| Voice-1 | (arc1,node1,arc5,<u>node5,arc9,node7,arc11,node8</u>) |
| Voice-2 | (arc2,node2,arc6,<u>node5,arc9,node7,arc11,node8</u>) |

It can be noted that the summability of the voice and of the SMS records is fulfilled in the node 5. With reference to the dimensioning, the voice has two paths, and accordingly its dimension equals 2. From Conclusion 1 it follows that the record representing the voice is a two-field record, while the record representing the SMS is a one-field record, since the SMS dimension is 1.

From Table Concl1 the fields representing the adoption of a tariff plan (table Concl1 ) are known for every service.

Therefore, the sum record is determined following the rules indicated in the table Concl1. The sum record dimension equals the largest dimension of the addend records so as to avoid the loss of information.

Therefore, the first column of the table Concl1 shall be read at the Voice line obtaining the value 1, the first column of the table Concl1 will then be read at the SMS line obtaining the value 1, thus extracting the content of the voice record in the field number 1, the content of the SMS record will be extracted in the field number 1 and those two values shall be added, writing this addition in the sum record of the field 1. Then the second column of the table Concl1 shall be read at the Voice line, obtaining the value 2, the second column of the table Concl1 shall then be read at the SMS line obtaining the value 1, thus extracting the content of the voice record in the field number 2, the content of the SMS record will be extracted in the field number 1 and those two values shall be added, finally writing such addition in the sum record in the field 2.

For such sum record a table similar to the table Concl1 will be created in order to indicate the match between the tariff plan and the sum record.

From the above the second result is obtained, that shall be defined hereinafter as "<u>Conclusion 2: Vertical Aggregation</u>": two services can be summed vertically in the origin node of a "Complete Admitted Intersection" extracted from all the paths associated thereto. The sum record dimension equals the largest dimension of the addend records.

The operation of vertical aggregation generates tables, defined hereinafter as Concl2-"j/x", completely similar to the Concl1.

Each one of such tables is related to the unit x of every level "j". Such tables have been indicated in the present description with the terminology Tabxc (with x being variable depending on the type of unit).

With the results obtained, finally all the information required to describe the process that designs automatically the tables of the Data Base of the present invention are obtained, tables contained in the various memory units previously described. Such process shall be called hereinafter Proc2.

The adoption of the process Proc2 shall be described hereinafter with reference to the example adopted up to now.

Therefore, starting from the table representation of figure 18, the following steps will be performed:

1) drawing the forest configured in relation to the temporary table of figure 18;

2) determining the dimension of every service, applying the Horizontal Aggregation, obtaining the related record design, that is the table Concl1, and obtaining the table DIM1 indicating its dimension (in the field 0 the "service code" is written, reported in its extended form for sake of simplicity). Further, the horizontal XOR is applied, constructing the table Tab1c. Such three tables are here reported:

| Concl1 | | |
|---|---|---|
| Service Code | PT1 | PT2 |
| Voice | 1 | 2 |
| SMS | 1 | 1 |
| Voice mail | 1 | 1 |

| DIM1 | |
|---|---|
| Service Code | Dim |
| Voice | 3 |
| SMS | 2 |
| Voice mail | 2 |

| Tab1c | |
|---|---|
| Service Code | Val |
| Voice | 1 |
| SMS | 0 |
| Voice mail | 0 |

3) Writing in column all the paths related to all the services, as disclosed hereinafter

| voice mail | (arc4,node4,arc8,node6,arc10,node7,arc11,node8) |
|---|---|
| SMS | (arc3,node3,arc7,node5,arc9,node7,arc11,node8) |
| Voice-1 | (arc1,node1,arc5,node5,arc9,node7,arc11,node8) |
| Voice-2 | (arc2,node2,arc6,node5,arc9,node7,arc11,node8) |

4) Analyzing the terminal nodes (only one in this case - the node 8) of level 4 and apply the Vertical Aggregation (they being terminal nodes) and detecting the arcs inputting to node 8 and determine their number. In this case it follows that the only inputting arc is number 11, therefore it is known that all the services can be summed thereto. Thus, there will be only one result record whose dimension equals 3 (equalling the largest dimension written in the Table DIM1). Such result record is the one stored in the tables Tab12b1 and Tab12b2 previously described with reference to the fourth level adding units 1210 and 1220. Then the control tables of the downstream unit are generated, i.e. the minimization unit 900. The result record will be indicated with rec12b1 and rec12b2 and the control tables will be indicated with Tab9c1 and Tab9c2 . Such tables are reported here:

| Tab9c1 | | |
|---|---|---|
| Service Code | PT1 | PT2 |
| rec12b1 | 1 | 2 |

| Tab9c2 | | |
|---|---|---|
| Service Code | PT1 | PT2 |
| rec12b2 | 1 | 2 |

Knowing that the only arc inputting in the node 8 is number 11, it can be deduced that there will be only one record type input to the fourth level adding units 1210 and 1220. As it was the case with the preceding units, the adding units will be such as to provide control tables Tab12c1 and Tab12c2, which will indicate the design of the records stored in the memory units, wherein the higher level units 1110 and 1120 input the results (Tab11b1 and Tab11b2), and will be generated in the subsequent step.

5) The nodes of level 3 will now be analyzed. In this case as well there is only one node (node 7) and therefore a "Vertical Aggregation" will be obtained. The arcs inputting in the node 7 will now be detected and their number determined. In this case there are two inputting arcs, number 9 and 10. Since the node of level 3 is single, there will be only one result record whose dimension equals 3. Such result record is the one stored in the tables Tab11b1 and Tab11b2 (described in the preceding figures 14 and 15) that in this example will contain the same information. The control tables of the lower level are now generated (i.e. the units 1210 and 1220 of the previous step). The result records are indicated as rec11b1 and rec11b2 and such tables are indicated as Tab12c1 and Tab12c2.

| Tab12c1 | | |
|---|---|---|
| Service Code | PT1 | PT2 |
| rec11b1 | 1 | 2 |

| Tab12c2 | | |
|---|---|---|
| Service Code | PT1 | PT2 |
| Rec11b2 | 1 | 2 |

Knowing that there are two inputting arcs, the third level units 1110-1120 would expect 2 input records, and in particular one representing the voice mail service (arc 10) and the other representing the voice plus the SMS (arc 9). Actually, the process Proc2 will generate only one of them, as it will be apparent hereinafter. Likewise to what happens in the preceding step, the control tables are generated during the analysis of the higher level.

6) The nodes of level 2 will be analyzed. In this case there are 2 nodes (node 5 and node 6) and therefore the Vertical Aggregation cannot be applied to all the services, in the sense that not all the services can be summed therebetween.

Now the first node, i.e. the node 5, will be analyzed. It can be noted that the voice and the SMS can be summed therein (the node 5 is the origin node of a complete admitted intersection) and therefore the result record generated by the node 5 will be the product of a Vertical Aggregation between voice and SMS and its dimension is 2. Such first result record will be indicated hereinafter with R5voice_sms.

The second node, i.e. node 6 will now be analyzed. The only incident arc is related to the voice mail service, and therefore the result record generated by the node 6 will be of dimension 1. Such second result record shall be indicated hereinafter with R6voicemail.

The process Proc2, as it cannot apply a complete vertical aggregation, will then apply a "Horizontal Aggregation" on the results of the partial Vertical Aggregations, generating as an output of the level 2 a three-field record obtained putting together the record R5voice_sms and the record R6voicemail. Let us indicate this final record with the term Rec10. This will be stored in the tables of the unit 10 indicated as Tab10b1 and Tab10b2. The process Proc2 applied to the level 2 will generate the control tables for the unit of level 3 indicated in the figures 13 and 14 as Tab11c1 and Tab11c2, here shown:

| Tab11c1 | | | |
|---|---|---|---|
| Service Code | PT1 | PT2 | PT1 and PT2 |
| rec10b1 | 1 | 2 | 3 |

| Tab11c2 | | | |
|---|---|---|---|
| Service Cod | PT1 | PT2 | PT1 and PT2 |
| Rec10b2 | 1 | 2 | 3 |

The number of the arcs inputting to the nodes of level 2 equals 4, and moreover such arcs are all different. It will be seen how for the next step the process Proc2 shall have to manage the associability among the records compatibly with the operations performed by the switching unit 100, the subsequent level being the initial one.

7) Lastly, the nodes of level 1 will be analyzed. There are 4 nodes with incident arcs that are all different. This is not strange at all, as to the level 1 corresponds the level of the rating obtained directly on the record generated by a network file and therefore related to the single telephone service. It is assumed for sake of simplicity that operations of statistical processing of the F&F or Local Area type do not exist, or that more in general such optional services are not at all provided. In this case the unit 800 of figure 6 will provide exactly the same results of the unit 400 and thus, for sake of simplicity it can be assumed that the unit 400 writes its results directly in the tables Tab8b.

From what was stated at the step 2, the unit 100 realizes a switching of the records on the various chains (D, E and F lines) as indicated in table Tab1c, here reported for convenience.

Tab1c

| Service Code | Val |
|---|---|
| Voice | 1 |
| SMS | 0 |
| Voice mail | 0 |

Therefore, it is known that the voice service is analyzed by the chains related to the lines E and F, while the SMS and Voice mail services are analyzed by the chain related to the line D.

As it was done for the preceding steps, firstly the applicability of the Vertical Aggregation has to be verified, and then that of the Horizontal Aggregation. However, in this case both the aggregation types have to be conditioned by the switching markers, because only those services having the same value of the field Val will be mutually aggregated. In fact, if two services have different markers they will be processed by different processing chains, and therefore the pertaining results will be stored in different memory tables. Their aggregation is physically impossible.

The control tables of the nodes of level 1 are realized starting from the table Tab1c.

Therefore, the marker of the first service, e.g. of the voice will be read. Its value is 1 and therefore it will be processed by the units 400 and 500. It is known that the service dimension equals 2 and therefore the results outputted from the units 400 and 500 will be 2-field records. Such results are indicated as Rec5b and Rec4b (or Rec8b). Such results will be stored in the tables Tab4b (or Tab8b) and Tab5b. The voice service is the only one inputting in the chains related to lines E and F and therefore cannot be aggregated to any other service.

Now the marker of the second service, i.e. of the SMS will be read. Its value is 0. It is known that the relative dimension equals 1 and therefore the result will be composed by a one-field record. However, this is not the only service inputting in the chain related to the line D. In fact, the value of the marker of the Voice mail is 0 as well. The vertical aggregation condition between the two will now be verified. This condition is not fulfilled as no complete admitted intersection exists in level 1. Then, the horizontal aggregation that can be obtained just by virtue of the fact that the two services are inputted in the same chain will be applied.

The voice mail dimension equals 1 and therefore its result record should be a one - field one. From the adoption of the horizontal aggregation it follows therefore that the result record generated from the unit (chained to the line D) will be a 2-field record. This result will be stored in the table Tab2b and therefore might be named Rec2b.

The second level units 1010, 1020 will have to read in three memory tables where the results are contained, and therefore three control tables will exist. Due to the aforesaid, these will take the following form

| Tab10c1 | | |
|---|---|---|
| Service Code | PT1 | PT2 |
| Rec4b* | 1 | 2 |

* i.e. Rec8b

| Tab10c2 | | |
|---|---|---|
| Service Code | PT1 | PT2 |
| Rec5b | 1 | 2 |

| Tab10c3 | | |
|---|---|---|
| Service Code | PT1 and PT2 | PT1 and PT2 |
| Rec2b | 1 | 2 |

The description of level 1 will be concluded identifying the control tables of the corresponding units (units 200, 400 and 500). These tables are similar to the Tab10cx, with the peculiarity of referring to the single traffic service.

| Tab2c | |
|---|---|
| Service Code | PT1andPT2 |
| sms | 1 |
| Voice mail | 2 |

| Tab4c | | |
|---|---|---|
| Service Code | PT1 | PT2 |
| Voice | 1 | 2 |

| Tab5c | | |
|---|---|---|
| Service Code | PT1 | PT2 |
| Voice | 1 | 2 |

Their determination is simple, and does not require any additional step. These tables indicate that the voice will be processed exclusively by the units 400 and 500. In particular, the unit 400 receives the voice record, applies to it the parameters of the tariff plan 1 and updates what written in the first field of the result record Rec4b, then applies to it the parameters of the second tariff plan and updates what was written in the second field of record Rec4b. A completely similar description is valid for the other units as well.

As for what has been written up to now with reference to the control unit, the control tables Tabxc of the single processing units have been explained in detail. In the following, the design of the tables Tabxa of the parameters and of the tables Tabxb of the results will be described.

Firstly, the parameter tables will be taken into account.

8) The Process Proc2 easily assigns the calculation parameters to each unit of the system, as each of those corresponds to a node of the configured forest.

In particular, for the level 1 units the following is provided:

Unit 200 - Tab2a

This is the table extracted from the Tariff profiles grid by reading the various records for all the services having the marker of the Tab1c equal to 0.

Tab2a

| Cod | PT1 and PT2 |
|---|---|
| S.sms.r.p | 150 ITL /mess. |
| S.sms.r.d | 5% |
| S.sms.oc.a.f | 90 |
| S.vm.r.p | 200 ITL /min |
| S.vm.r.d | 0 |
| S.vm.oc.a.f | 0 |

Units 400 and 500 -Tab4a and Tab5a

(the two tables are identical, because in the example at issue the statistical detection parameters have not been taken into account. Only one is reported here)

The table Tab4a is the table extracted from the Tariff profiles grid reading the various record for all the services having the marker of the Tab1c equal to one.

Tab4a

| Cod | PT1 | PT2 |
|---|---|---|
| S.voice.r.p | 350 ITL /min | 400 ITL /min |
| S.voice.r.d | 0 | 0 |
| S.voice.oc.a.f | 130 ITL | 100 ITL |

In a completely similar way the remaining tables of the parameters Tab10a, Tab11a etc. are obtained.

9) An important feature related to the result tables Tabxb will be disclosed here.

The aforedisclosed concerns the treatment of the record of the single service required to minimize the memory use in the system. Accordingly, the Vertical Aggregation and the Horizontal Aggregation have been mentioned in order to allow the propagation along the whole system of the single record coming from the network. Therefore the format of the control tables and of the processing parameters has been detected, and for every unit (level) the format of the record accepted as an input and output as a result has been also determined. Nothing has been said about the number of records existing in every table.

From the adoption of the horizontal aggregation, it is known that any event related to the telephone contract can be represented by a specific record series in which the fields are dynamically designed by the process Proc2. This record series has a particular feature related to the level it belongs to.

In fact, the following conclusion can be reached:

Conclusion 3 - Memory Distribution with respect to a level: All the "single" "result records" generated by a generic level "j" are stored each in a "unique table" of the memory.

In fact, the "result records" generated by level 1 are 3 (Rec2b, Rec4b and Rec5b) and are stored in the tables Tab2b, Tab4b and Tab5b. The results of the other levels can be similarly described.

Such a conclusion is very important, as it greatly influences the machine time to access the memory.

As it is known that for every result record only one hosting table exists, it can be stated that there is a biunivocal correspondence between the set of the tables in a level and the result records generated from the level itself, or that the "dimension" of the set of the tables of a level" equals the "dimension" of the set of the result records of that level". This ensures that the biunivocal correspondence between "The set Combination of the Tables of a Level" and "the set Combination of the result records of a Level" is preserved.

Therefore, imagining to merge (put side to side) the tables of a level, there will be only one result record sufficient to describe any event connected to the telephone contract for that level itself. This holds true for any other level as well.

Therefore, it can be supposed to adopt this merging for all the levels. Having 4 levels, 4 Table-Merging will be obtained, and thus 4 Types of Record-Merging with respect to the whole system.

Each Record-Merging represents a telephone bill state and, due to the system design, its propagation from a level to another is univocal.

Starting from this concept, the Record-Merging of the level 1 is to be identified with A1. This record is inputted in level 2 and processed, determining a result record. The result Record-Merging of the level 2 is to be identified with A2. Thus, the sequence A1, A2, A3 and A4 is obtained.

Another Record-Merging of the first level, identified as B1, is now provided. The sequence B1, B2, B3 and B4 is created in a completely similar way.

Due to the aforesaid, the two sequences are stored in four Tables-Merging that can be indicated as TU1, TU2, TU3 and TU4. Obviously, each record can be positioned in any line of the hosting table. However, since the match between Record and Table is biunivocal, a "Unique" element can be found which associates the hosting table to every record and vice versa (associated every table to the hosted record). This element is a "Key", i.e. a relation between two objects.

By positioning every "Sequence Record" in the same line of every "Hosting Table", the association key becomes the "Line Number". The following table configuration is thus obtained:

| Line No. | TU1 | TU2 | TU3 | TU4 |
|---|---|---|---|---|
| 1 | A1 | A2 | A3 | A4 |
| 2 | B1 | B2 | B3 | B4 |

Setting as association key the line number, a biunivocal relation is automatically determined between the "Line Number" element and the "Sequence ID" Record-Merging element. In the example, there is a biunivocal correspondence between line number **1** and ID A and a biunivocal correspondence between line number **2** and ID **B**.

The identifying element of a sequence is nothing else than a Telephone Contract, i.e. the Subscriber's ID.

Therefore, we reach the

Conclusion 4 - Homogeneity of a Telephone contract ID in the Memory: For a telephone contract, all the result records of each level are stored in the hosting tables at the same memory line.

The substantial advantage deriving from Conclusion 4 is that for a same subscriber all the control unit processes will access their working memory (i.e. the Tables assigned) in the same line. During the description of figure 4 it has been stated that a processing step received an input, searched the record concerning that input record ID in memory Tabxb, performed the result updating and overwrote in memory the result thus modified. Thus, the memory search operation was performed for every distinct ID of the input and for every processing step.

Due to how the system of the present invention was designed, it follows that the processing steps are chained with respect to the levels. This is tantamount to say that when the unit 100 has ended its calculations, the units 200, 400 and 500 are activated. When the unit 400 has ended its calculations, the unit 800 is activated. When the units 200, 800 and 500 have ended their processings, the units 1010 and 1020 are activated and so on.

Therefore it is not necessary for every unit to search in its own working memory the ID of the input record, because such search will always return the same line number. That is, for instance, the result records for the subscriber Mario Rossi will be in line No. 80 of the tables Tab2b, Tab4b, Tab5b, Tab8b, Tab10b1 and Tab10b2, Tab11b1 and Tab11b2, Tab12b1 and Tab12b2, Tab9b. Thus, it suffices to perform the line search operation only once. This task is usually entrusted to the unit 100 heading the whole chain. In the Data base related to the various tables Tabxa, Tabxb, Tabxc there will be a table named Customer_Mem_ID where the ID code line for the user is indicated. The table shall be as follows.

| Customer_Mem_ID | | |
|---|---|---|
| Cod | Customer_ID | Mem_line |
| 1 | Mario Rossi | 80 |
| 2 | Carlo Verdi | 43 |
| ... | ... | ... |
| N | Giulio Bianchi | 5,000,000 |

The unit 100, recognizing the Customer_ID in the input CDR, searches the line indicated as Mem_line in the Table and passes this number to the other processes as a parameter.

This operation is known with the term "Process Activation by Parameter Passage", and a possible command can be e.g. start_procxx(80), where 80 is the parameter value.

Thus, the memory access time will be remarkably shortened. The unit 100 will perform an exhaustive search over the entire Customer_Mem_ID table, using an appropriate technique as a function of the number of subscribers (a technique with good performances for a number of subscribers exceeding the million can be the hash type one). All the other units will receive directly as parameters the line number of the memory whereto they may access, and therefore they will perform a direct key access.

Extension of the Procedure Proc2 to the Statistical Services

Up to now it has been assumed that the Tariff Plans did not offer any optional services, having introduced two Standard Tariff Plans, i.e., where it is assumed that all services are always associated to the user.

It has already been noted above how usually a Telephone Contract consists of two sections, the first related to the basic services and the second comprising the optional services. The optional services usually require the user to configure some parameters.

Object of the present invention is also that of calculating the best Tariff Plan taking into account the presence of the optional services.

To this end, the following is stated. A telephone contract is nothing but a statement on how the services chosen by the user, to the use of which he will be entitled, will be rated. Obviously, the fruition of a service requires means allowing the use thereof. In the telecommunications sector this means is the network, be it related to the mobile radio technology or to the stationary technology. Activating a contract therefore entails two main actions:

1) Inclusion and configuration thereof in the "administrative" data processing managing system.
2) Inclusion and configuration thereof in the data processing managing system of the network.

What said with reference to point 2) means to write in a memory assigned to the network control all and only all the services to the use of which the user will be entitled. Point 1) instead means to write in a memory assigned to the billing control system (i.e., assigned to a system as the one according to the present invention) all and only all the services the user shall be billed for (even at nil price). Obviously, the two control memories are mutually consistent, in the sense that it is impossible for a user to receive a CDR from the network related to a service he did not choose. Technically, at a network level the service in object is said to be "barred" to that user.

However, some optional services are specific configurations of the basic services. In fact, an appropriate example can be provided by the F&F service, which is actually a specific administrative configuration of the voice criterion service. Therefore, the present invention is capable of processing all those optional services linked to services already configured for the user.

Also to this end, in the architecture introduced in figure 4 the distinction between the two chains E and F was made. In the chain F the data of the User's Reference Plan are adopted, now meaning as a reference plan the whole set of the basic and optional services (therefore representing a contract), while in the chain E the basic services parameters are adopted as from the standards of the Tariff Plans configured in the system, while for the optional services statistical surveys for the detection of their optimal configuration will be adopted. Due to what said in the description of the unit 700 referring to the sort routines, there is the need of configuring the statistical calculation logics, and moreover there is also the need of activating the statistical calculation itself by an action called of "provisioning", where with such term the actual feeding action carried out by the control unit, also of the logical type, is intended.

For simplicity of explanation, the tariff plan table will be re-examined, this time including also the F&F optional service, whose optimal configuration requires a statistical analysis.

An extract of a new Tariff Plan Table related to the F&F service is reported hereinafter, with the exclusion of the costs not related to the traffic, which will be contemplated in the next section.

| Cod | PT1 | PT2 |
|---|---|---|
| S.ff.r.p | 100 | 120 |
| S.ff.r.d | 5% | 5% |
| S.ff.v.p | 0 | 0 |
| S.vm.oc.a.f | 50 | 0 |
| S.vm.t | 19% | 19% |
| S.vm.onc | 0 | 0 |

Such table expresses simply the price of the F&F service, not indicating anything about its logic. Such fact takes into account the cascade disposition of the units 700 and 800 of figure 6. In particular, the unit 700 operates by determining the optimal configuration of the service on the basis of its logic, while the unit 800 applies the review of the price of the basic service by which the F&F originates. In the specific example, the unit 700 of the sort routine will detect the friendly numbers and then the "re-rating" unit 800 will apply a retroactive discount to the voice service in the field of the record that represents it.

Therefore, in case of such optional services the interpretation of a further information is required, i.e. the logic of the service, contained in the definition of the service itself.

The instance that the F&F service allows to bill the voice toward three friendly numbers at an advantageous price, indicated in the Tariff Plan Table will be now taken into consideration.

This is stated through the following exemplifying front-end mask:

| Friend&Family Service | | | |
|---|---|---|---|
| Cod | Number | Basic Service | Flag |
| f.f.1 | | Voice | 1 |
| f.f.2 | | Sms | 0 |
| f.f.3 | | Internet | 0 |
| | Flag | ….. | .. |
| Statistical Analysis Service | 1 | Data fax | 0 |

Such mask shows how the F&F service is applied only to the voice (as the flag equals 1), consists of three friendly numbers that have to be declared, and moreover is a service subject to statistical analysis from the unit 700.

The sort routine assigned to the statistical detection of the "Called-Number" for the CDR of Voice-type "Information Nature", if activated, will receive as a parameter the quantity of numbers to find, in this case equal to 3.

Therefore, it can be remarked that the control tables of the sort routine actually do not exist, as the sort routines themselves contain the controls. The real control table of the unit 700 of the sort routines is the one selecting the specific sort routine that is to be activated, replaced however by a compiler's command.

There is a further control table of the sort routines, being the one indicating which data have to be collected by the memory unit 302 (Traffic Data Base), but, due to the aforesaid, this table does not reside in the Data Base of the various Tables Tabxa, Tabxb, Tabxc as it is produced from case to case by the control unit 301 of the Traffic Data Base itself.

Moreover, the activation of a particular sort routine takes place through an operative system, that receives the compile and creation command of the executable program for the particular sort routine directly from the front-end of the service configuration.

The modifications performed onto the aforedisclosed records will be illustrated hereinafter.

Continuing with the F&F example, the voice service can be interpreted both with its full price and with its F&F tariff. How this happens has already been disclosed above. With reference to the PT1 Tariff Plan, two possible interpretations of the voice will be possible: one as PT1 and the other one as PT1+F&F. A similar remark applies to the adoption of the F&F service to the tariff plan PT2.

With reference to the unit 800, this is present, as it is known, at the end of the chain Unit 400 - Tab4b - Unit 800 - Tab8b.

The unit 800 for applying the record-referred discount will receive as an input the data outputted from the unit 400 (Tab4b) and therefore its control table will be as follows:

| Tab8c1 | | |
|---|---|---|
| Service Code | PT1 | PT2 |
| Rec4b | 1 | 2 |

Such unit will output a result composed by a four-field record for the units 1010 and 1020, modifying the control table of the units 1010 and 1020 as follows

| Tab10c1 | | | | |
|---|---|---|---|---|
| S. C. | PT1 | PT1+FF | PT2 | PT2+FF |
| Rec8b | 1 | 2 | 3 | 4 |

| Tab10c2 | | |
|---|---|---|
| S. C. | PT1 | PT2 |
| Rec5b | 1 | 2 |

| Tab10c3 | | |
|---|---|---|
| S. C. | PT1+PT2 | PT1+PT2 |
| Rec2b | 1 | 2 |

In general, indicating with "n" the number of optional services created on a basic service and with "m" the number of tariff plans, it will follow that the "dimension" of the record representative of that service is $dim_2 = dim_1 \cdot 2^n$, where dims indicates the dimension of that service obtained without taking into account the optional services of step 2.

The aforesaid will be explained using an example. The instance that the optional services are two is assumed: F&F and Local Area, further assuming to have only one tariff plan PT1. Moreover it is assumed that such optional services are applicable only to the "voice" basic service. The unit 800, whose only task is the processing of the data pertaining the record taxation and the record discount level, will show the following information with regard to the voice service:

| Service Code | PT1 | PT1+FF | PT1+Local | PT1+FF+Local |
|---|---|---|---|---|
| Voce | 1 | 2 | 3 | 4 |

This means that the first field indicates the rating of the voice without the adoption of any optional service, the second field indicates the adoption of F&F only, the third indicates the adoption of Local only, and the fourth indicates the adoption of F&F + Local. It is apparent that in every single field an optional service is either applicable or not applicable. Its applicability can therefore be represented by a boolean variable indicated with xj.

Thus, having "n" (n=2) boolean variables represented, and being the number of possible combinations equal to $2^n$(=4), $2^n$ fields (4 fields in the example) will be generated. If the basic service has by its nature an "m" fields representation, then the total number of fields will equal $m \cdot 2^n$. The number "m", due to the aforesaid, equals the "dimension" of the basic service. Accordingly, as in the present example the voice dimension is 2 (field pertaining to PT1 and field pertaining to PT2) there will be a total of 8 fields.

A design feature concerning the management of the result shall be commented hereinafter.

From what has been stated hereto, it can be concluded that for the basic services the field design depends on the conditions of applicability of the Vertical Aggregation and of the Horizontal Aggregation. In particular, the latter type of aggregation is always applicable with the exception of the first level, where a flux separation occurs. In the worst possible case, when no type of Vertical Aggregation can be performed, the dimension of the result record grows linearly with the dimension of the single basic services, as the only action performed is that of merging the fields representing every single basic service itself. Including now the optional services, it is apparent that the record dimension grows exponentially with the number of the original basic services.

The number of fields therefore can become too high, so as not being manageable by a normal Data Base.

Therefore, it has to be pointed out how the fact that the number of records becomes so high is not a consequence of how the present invention has been made, but rather of the fact that the Tariff Plans and the services that are usually declared actually create a very large set of objects. The present invention minimizes the number of objects in the system whenever they can be associated according to the aggregation conditions. However, if no associability condition is respected then the minimization operation will have no effects. Anyhow, the present invention is structured to manage the cases of high dimensions of the problem, thanks to the particular architecture adopted, but also thanks to the application of optimal accessing rules, in particular direct key access (when referring to the "memory" resource) both for design techniques e.g. as the simplex algorithm for the detection of the optimum (when referring to the "machine time" resource).

The direct key access can be always applied, just by virtue of Conclusion 4. However, this condition requires the storing of every result record in a single memory table, thereby satisfying Conclusion 3. Yet, a memory table cannot contain an unlimited number of fields, and therefore Conclusion 4 might not be technically satisfied. Nevertheless, recalling the results of Conclusion 3, it follows that the biunivocal relation between a result record and a hosting table allows the creation of Tables-Merging hosting Records-Merging keeping the biunivocity itself satisfied, and therefore keeping Conclusion 4 satisfied.

This design technique therefore enables to obtain records having a very large number of fields.

In fact, it could be assumed to have a very large level 2 record, e.g. of 925 fields (it has to be considered that usually the normal Data Bases support up to 200 fields; for higher values those would risk not to be capable of managing the structure in terms of performances). It could be imagined that the record is the Rec8b stored in the Table Tab8b. The condition 3 enables the creation of a "Table Structure" Tab8b consisting of several elemental Tables. It is assumed to have set a limit of 100 fields per single elemental table. Accordingly, there will be 10 elemental tables placed side by side and the reading of the field 925 of the line 40 (it is recalled that the line number has been passed as a parameter) will mean "read in the ninth table at the column 25 at line 40" that still corresponds to a direct key access.

Thus, the structure Tab8 will be as follows:

Tab8b

| Tab8-1 | Tab8-2 | Tab8-3 | Tab8-4 | Tab8-5 | Tab8-6 | Tab8-7 | Tab8-8 | Tab8-9 | Tab8-10 |
|---|---|---|---|---|---|---|---|---|---|

Extension of the Procedure Proc2 to other costs non Proportional to Traffic

Now the issue related to all the cost parameters non proportional to traffic, as the monthly fee or the activation cost etc. will be discussed. The aforementioned tariff plans scheme, will be taken again into consideration extracting only the cost voices of interest. Moreover, also an optional service as the F&F and some event services such as the SIM card change (Sim.ch) and the phone change (Ph.ch) shall be introduced. The table disclosed below is obtained:

| Code | PT1 | PT2 |
|---|---|---|
| **Basic** | | |
| S.voice. | | |

(continued)

| Code | PT1 | PT2 |
|------|-----|-----|
| **Basic** | | |
| S.voice.oc.m.f | 30000 | 25000 |
| S.voice.oc.s.f | 15000 | 15000 |
| S.voice.onc | 2000 | 2000 |
| S.sms. | | |
| S.sms.oc.m.f | 3000 | 3000 |
| S.sms.oc.s.f | 2000 | 2000 |
| S.sms.onc | 1000 | 1000 |
| S.vm. | | |
| S.vm.oc.m.f | 1500 | 1800 |
| S.vm.oc.s.f | 500 | 800 |
| S.vm.onc | 2500 | 2500 |
| **Optional** | | |
| S.ff. | | |
| S.ff.oc.m.f | 10000 | 10000 |
| S.ff.oc.s.f | 3000 | 3000 |
| S.ff.onc | 0 | 0 |
| **Event Service** | | |
| Sim.ch | 20000 | 20000 |
| Ph.ch. | 25000 | 25000 |

From the description of figure 4 on, two fluxes concerning costs not deriving from traffic have been introduced, divided in taxable and not taxable cost, inputting in units 1010-1020 and 1210-1220 respectively. The related result tables are contained in the Data Base of the tables Tabxa, Tabxb, Tabxc and will depend both on the Contract chosen by the user and on the configuration of the optional services in the system in object.

When a user declares his/her reference contract, he/she is actually choosing the set of the basic services (to be interpreted on the basis of a reference plan) together with a subset (at most, all) of optional services for which he/she declares also the configurations (F&F numbers). A number of "Reference Contracts" equaling that of the configured tariff plans is automatically associated to the user, precisely because the set of basic and optional services is defined. As aforestated, those reference contracts will be processed through the chain F. It will have to be pointed out how the costs that are not proportional to the traffic fall under the total billing calculation.

For sake of simplicity, let us indicate as non-traffic costs not deriving from the traffic all those costs that are not proportional to the traffic.

Given a configuration of the user's reference contract, a series of flag indicating which services are to be provided and consequently which costs not deriving from the traffic are to be included in the bill.

It is assumed that a user has selected a contract without the F&F service and has replaced a SIM card. The following table is obtained.

| Code | PT1 | PT2 | Flag |
|------|-----|-----|------|
| S.voice. | | | |
| S.voice.oc.m.f | 30000 | 25000 | 1 |
| S.voice.oc.s.f | 15000 | 15000 | 1 |
| S.voice.onc | 2000 | 2000 | 1 |

(continued)

| Code | PT1 | PT2 | Flag |
|---|---|---|---|
| S.sms. | | | |
| S.sms.oc.m.f | 3000 | 3000 | 1 |
| S.sms.oc.s.f | 2000 | 2000 | 1 |
| S.sms.onc | 1000 | 1000 | 1 |
| S.vm. | | | |
| S.vm.oc.m.f | 1500 | 1800 | 1 |
| S.vm.oc.s.f | 500 | 800 | 1 |
| S.vm.onc | 2500 | 2500 | |
| S.ff. | | | |
| S.ff.oc.m.f | 10000 | 10000 | 0 |
| S.ff.oc.s.f | 3000 | 3000 | 0 |
| S.ff.onc | 0 | 0 | 0 |
| Sim.ch | 20000 | 20000 | 1 |
| Ph.ch. | 25000 | 25000 | 0 |

Such table is a working table that is always used by the application program Proc2 as a consequence of the "provisioning" actions. In fact, the replacement of a Sim card is a manual operation, entailing the logging of a per "event" cost, i.e., of provisioning.

Given all the not taxable cost voices (S.voice.onc, S.sms.onc, S.vm.onc, S.ff.onc) and all the taxable cost voices (all the others) the application program Proc2 reads all and only all the fields that have undergone a provisioning action for which the flag assumes the value 1. Therefore, a "taxable costs total" and a "not taxable costs total" that have to be associated in the user's bill are produced. These results are stored in two tables called Tab_nt_oc (other not taxable cost) and Tab_t_oc (other taxable cost) that shall be read by units 1010-1020 and by units 1210-1220 related to the rating of the user's reference plan. These two tables will be read by control tables assigned to the units, an example of which is reported.

| Tab10c4 | | |
|---|---|---|
| Service Code | PT1 | PT2 |
| Rec-oc-nt | 1 | 2 |

| Tab12c3 | | |
|---|---|---|
| Service Code | PT1 | PT1 |
| Rec-on-t | 1 | 2 |

In the case in object such tables shall acquire the following values:

| Tab10c4 | | |
|---|---|---|
| Service Code | PT1 | PT2 |
| Rec-oc-nt | 2500 | 5500 |

| Tab12c3 | | |
|---|---|---|
| Service Code | PT1 | PT1 |
| Rec-on-t | 72000 | 67600 |

The tables Tab10c3 and Tab10c4 have not been previously described with reference to figures 12 and 13, for ease of explanation. However, it is understood that these are to be intended as logically contained in the above described units 1011, 1021.

With reference instead to the costs not deriving from the traffic to input in chain E, the design of the tables takes a different form.

From what was said in the section pertaining the statistical services, it follows that the optional services are included in the calculation of the possible bills billable to the user on the basis of the possible combinations of the statistical services. Accordingly, also the activation costs and the monthly fees have to be calculated. Thus, in a possible combination in which the F&F service is not adopted (boolean variable associated thereto equal to 0) the monthly fee and activation cost associated thereto have to provide a nil contribution. This is made by the application program Proc2 by simply multiplying such values for the boolean variable.

The important aspect is that the number of fields of the result records, and therefore the pertaining control tables of the units 1010-1020 and 1210-1220 follow a rule similar to the one disclosed in the section concerning the statistical services. Thus, the record dimension shall be dim $* = $ dim $\circ \cdot 2"$ , where for dim$\circ$ the maximum dimension of the basic services is intended (coinciding with the number of tariff plans in 99% of the cases).

Further objects of the control unit relate to the configuration processes of the access rights to the Data Base as well as to the I/O processes for the integration with other systems. Techniques known to a man skilled in the art can be used for both the latter cases.

A comparative analysis of the billing system according to the present invention with a billing system known to the art shall now be carried out.

To the ends of the comparative analysis hereinafter, firstly it has to be remarked that a billing system known to the art can process the user data solely by use of a set of parameters that have already been configured. This means that, in case wherein there are n distinct tariff plans, such processing system will process each record through n different cost parameters, thus creating n distinct rated records. Moreover, such a system will process the data record by record. This means that the dimension of the data will vary from one tariff plan to another, depending also on the number of calls made by the users. It is also to be noted that a rated record is certainly bigger than an unrated one.

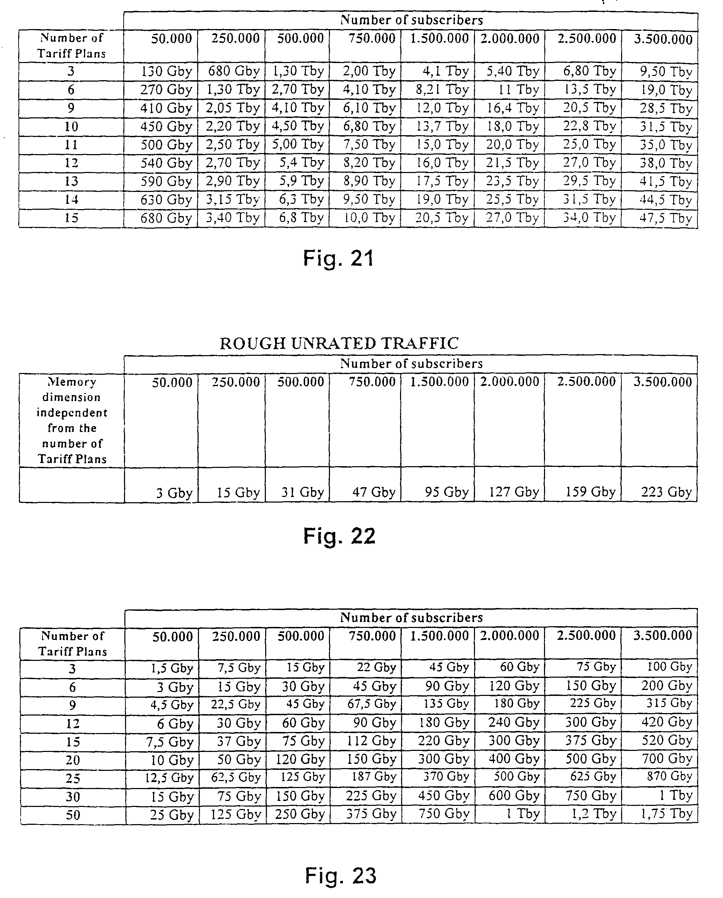

The table of figure 21 indicates the memory space occupied by the records, depending on the number of the tariff plans and on the number of subscribers. Assuming to have a maximum on-line memory capability equal to 7 Terabytes (which is already extremely high by itself) the only allowed combinations are those represented in gray. Other disadvantages of such a system known to the art derive from the impossibility of managing a variable tariff plan, and therefore from the impossibility of managing a service of the F&F or Local type, as the parameters representative thereof are not known.

The tables of figures 22 and 23 refer instead to the system according to the present invention. In particular, the table of figure 22 refers to the rough unrated traffic, i.e., the dimension of DataBase 302. The table of figure 23 instead has a structure identical to the table of figure 21. However, the difference is apparent. In particular, it can be noted how even in the most complex case taken into consideration (3.500.000 users and 50 distinct tariff plans) the 7 Terabyte threshold is far from being reached.

Therefore, the present invention proves particularly suitable for the management of a high number of users and of a high number of tariff plans.

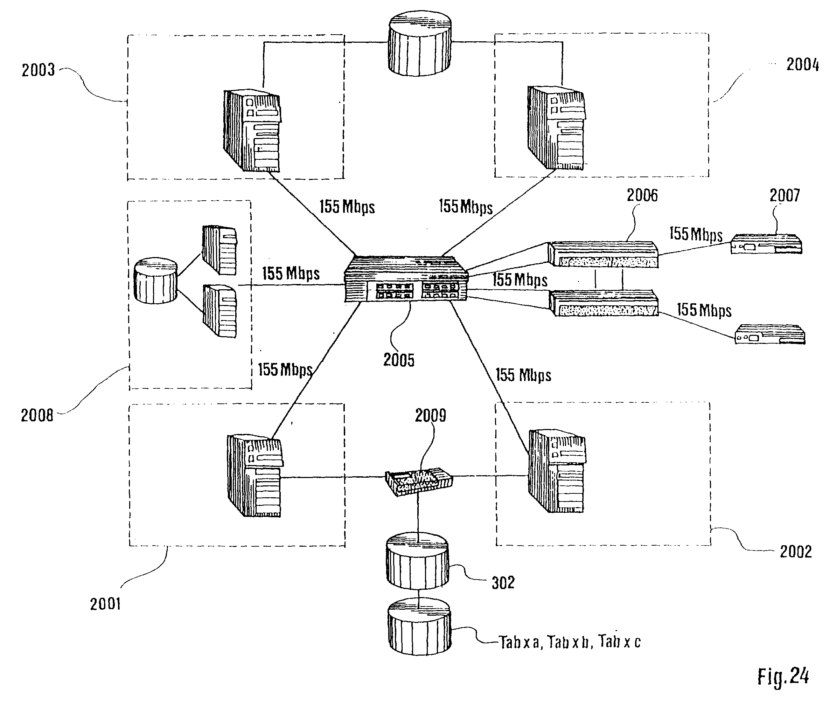

Finally, reference will be made to figure 24, illustrating a hardware structure (e.g. a structure of the Digital DEC Server type) for the system according to the present invention, to be understood as contained in a chain of the "batch" type, represented by the processors 2001 and 2002. The system composed by the units 2003, 2004 represents a billing system known to the art, collecting and rating information from the network through an ATM switch 2005 and related secondary switches and hubs 2006 and 2007 respectively.

For a controlled migration from a billing system known to the art to the billing system according to the present invention, a collecting buffer 2008 can be provided, sending the CDR's to both the billing systems.

One of the possible uses of the present invention is that of being adoptable for a subset of the telephone company users. This use refers just to a structure like the one represented in the figure, i.e. in which there is a storage buffer 2008.

In particular, the processor 2001 implements exhaustively the system according to the invention, while the processor 2002, linked thereto by a port controller 2009, may implement an integrated system for the printing of a bill detailed according to the needs.

## ANNEX A

"SIMPLEX METHOD APPLIED TO DETECT THE BEST BILL"

Let us indicate with *Vji* the value of the potential bill 'i' for the subscriber 'j',

Let us indicate with

$$\tau_{ji}$$

a boolean variable associated to the bill 'i'
for the subscriber 'j',

Let us indicate with

$$B_j = \sum_{i=1}^{n} \tau_{ji} \times V_{ji}$$

one of the potential bills for the subscriber 'j' obtained with the following conditions:

$$\tau_{ji} = boolean \ \mathrm{var}iable$$
$$\sum_{i=1}^{n} \tau_{ji} = 1$$

Let us now indicate with

$$B = a \times \left( \sum_{j=1}^{k} B_j \right) - d$$

one of the potential bills of the "large account" obtained by the revision with proportional parameters (parameters "a") and not proportional (parameters "d") in accordance with the applicability conditions

$$\sum_{j=1}^{k} B_j \in (applicability \cdot conditions)$$

The minimization unit 900 processes the input data by solving the following optimum problem

$$B^* = \min \left\{ \left[ a \times \left( \sum_{j=1}^{k} \sum_{i=1}^{n} \tau_{ji} \left( a_i V_{ji} \right) \right) - d \right] \right\}$$
$$\sum_{i=1}^{n} \tau_{ji} = 1 \ : \ \forall j \in [1, k]$$
$$\tau_{ji} \geq 0 \ : \ \forall j \in [1, k], \forall i \in [1, n]$$
$$\left( \sum_{j=1}^{k} \sum_{i=1}^{n} \tau_{ji} \left( a_i V_{ji} \right) \right) \in (admissibility \cdot conditions)$$

The present optimum problem can be solved using several solving methods (Knapsack method, Simplex method, Ellipsoid method, etc. according to the actual tariff plan structures of the company) if and only if the admissibility condition can be represented as a convex function.

In the case of the present invention the imposed admissibility condition can consist in overcoming an expense threshold of ITL xxxx and applying a retroactive discount of ITL zzz on the whole sum The constraint is linear and constant, and therefore convex.

Therefore, in this case, the following optimum problem occurs

$$B^* = \min\left\{\left[\left(\sum_{j=1}^{k}\sum_{i=1}^{n}\tau_{ji}\left(a_iV_{ji}\right)\right) - zzz\right]\right\}$$

$$\sum_{i=1}^{n}\tau_{ji} \geq 1 \quad : \quad \forall j \in [1,k]$$

$$\tau_{ji} \geq 0 \quad : \quad \forall j \in [1,k], \forall i \in [1,n]$$

$$\left(\sum_{j=1}^{k}\sum_{i=1}^{n}\tau_{ji}\left(a_iV_{ji}\right)\right) \geq xxxx$$

As it can be noted, the condition regarding the boolean variables has been relaxed in order to be able to apply the method itself in its more general form, thus making it possible to apply the most efficient calculation methodologies (solution of the dual problem for the min-cost flow algorithm or the revised Simplex Method).

The Simplex Method in general does not ensure the existence of a boolean solution, as it implies the variables pertinence to the field of the real numbers.

However, the same method ensures that whenever an optimal solution exists, the same coincides with an angle of the admissible set as defined by the problem conditions, modeled hereinafter:

$$\sum_{i=1}^{n}\tau_{ji} \geq 1 \quad : \quad \forall j \in [1,k]$$

$$\tau_{ji} \geq 0 \quad : \quad \forall j \in [1,k], \forall i \in [1,n]$$

$$\left(\sum_{j=1}^{k}\sum_{i=1}^{n}\tau_{ji}\left(a_iV_{ji}\right)\right) \geq xxxx$$

Since the object function B*is always linear, monotone and strictly growing (sum of terms all strictly positive and non equal to zero), it is certain that the minimum point shall be assumed in the lowest extremity of the admissible set, which coincides for this model with a solution having boolean values, i.e. of the type:

$$\tau_{1,1} = 0, \tau_{1,2} = 0, \tau_{1,3} = 1, \tau_{1,4} = 0, \ldots \ldots \ldots \tau_{1,n} = 0$$
$$\tau_{2,1} = 1, \tau_{2,2} = 0, \tau_{2,3} = 0, \tau_{2,4} = 0, \ldots \ldots \ldots \tau_{2,n} = 0$$
$$\tau_{3,1} = 0, \tau_{3,2} = 1, \tau_{3,3} = 0, \tau_{3,4} = 0, \ldots \ldots \ldots \tau_{3,n} = 0$$
$$.$$
$$\tau_{k,1} = 0, \tau_{k,2} = 0, \tau_{k,3} = 0, \tau_{k,4} = 0, \ldots \ldots \ldots \tau_{k,n} = 1$$

Moreover, the admissibility matrix assumes an extremely advantageous form, being practically a diagonal block matrix (with the exception of the last line) with unitary values, whose storing does not require a remarkable memory occupation. The system resources shall therefore store only a vector coinciding with the last line, i.e. with all the Customer Bill Records contained in memories Tabl2b1 and Tab12b2 of the adding units related to the Large Account at issue .

This will assume the following form:

$$A = \begin{bmatrix} 111...1 & 000...0 & 000...0 & 000...0 \\ 000...0 & 111...1 & 000...0 & 000...0 \\ 000...0 & 000...0 & 111...1 & 000...0 \\ V_{1,1}V_{1,2}V_{1,3}...V_{1,n} & V_{2,1}V_{2,2}V_{2,3}...V_{2,n} & ............ & V_{k,1}V_{k,2}V_{k,3}...V_{k,n} \end{bmatrix}$$

The solution of the problem will give as results the value B*, i.e. the lowest-value bill, and the values assumed by the variables $\tau_{ji}$ i.e. the optimal tariff plans of the clients pertaining to the large account.

To this end, the adoption of the Simplex Method is preferable, as it always ensures in a deterministic way, in case of existence of a valid solution, the detection of a solution that will be managed as in the cases indicated hereinafter.

From the definition of the admissible set it follows that the cost function, before discount, is restrained to be not lower than the value xxxx, a condition which is necessary for the application of the discount.

Three are the different cases:

1) The cost function before discount never overcomes the threshold xxxx, or, although overcoming it, the sum of the boolean variables associated to a single user is strictly higher than one;

2) The function overcomes the threshold xxxx, the sum of the boolean variables associated to each single user is strictly equal to one and the application of the retroactive discount produces a total bill that is lower than the sum of the lowest values of the bills of the single customers;

3) The function overcomes the threshold xxxx, the sum of the boolean variables associated to each single user is strictly equal to one and the adoption of the retroactive discount produces a total bill that is higher than the sum of the lowest values of the bills of the single customers.

For these cases record a "span routine" process is provided among the fields of every single user, in order to detect the lowest-value bill without taking into account the discount rate at a Large Account level. Thus, the Large Account bill is reconstructed as the sum of the lowest values found.

The value B*1 thus determined thereof is compared to the value B* determined with the Simplex Method. With reference to the abovementioned cases, the following final results are obtained:

1) In the case wherein the cost function before discount never overcomes the threshold xxxx, the Simplex Method returns an optimal not existing solution. In the case wherein the cost function before discount tops the threshold xxxx but the sum of the boolean variables associated to a single user is strictly higher than one, the Simplex Method returns a not acceptable solution, as this means making a single user pay more than one bill. Therefore, in every case the B*1 will be the best bill;

2) Bill B* is the best one;

3) Bill B*1 is the best one.


**Claims**

1.  A telephone billing system for real-time automatic detection of the best bill and of the best billing profile of a user on the basis of any number of tariff plans, characterized in that it comprises:

a) a switching unit (100), receiving as an input records related to events resulting from telephone traffic (30) and outputting two types of files, the first type of file being formed by records having a single economic interpretation of the tariff plans the second type of file being formed by records having several economic interpretations of the tariff plans;

b) a set of first level record-referred processing units, comprising:

b1) a first record-referred processing unit (200), receiving as an input said first type of file and outputting an economic value referring to the telephone traffic of data contained in said first type of file ;

b2) a second record-referred processing unit (50), receiving as an input said second type of file and outputting first economic values referring to the telephone traffic of data contained in said second type of file, said first economic values referring to the telephone traffic on said second type of file being based on optimal parameters ;

b3) a third record-referred processing unit (500), receiving as an input said second type of file and outputting second economic values referring to the traffic of data contained in said second type of file, said second economic values referring to the traffic being based on reference parameters, in particular parameters set through a user contract;

c) a set of second level volume-referred processing units, comprising:

c1) a first volume-referred processing unit (1010), receiving as a first input the output of said first record-referred processing unit (200) and as a second input the output of said second record-referred processing unit (50) and outputting first volume-referred economic values of the data contained in said second type of file, said first volume-referred economic values being based on said optimal parameters;

c2) a second volume-referred processing unit (1020), receiving as a first input the output of said first record-referred processing unit (200) and as a second input the output of said third record-referred processing unit (500) and outputting second volume-referred economic values of the data contained in said second type of file, said second volume-referred economic values being based on said reference parameters;

d) a set of third level tax-referred processing units, comprising:

d1) a first tax-referred processing unit (1110), receiving as an input the output of said first volume-referred processing unit (1010) and outputting first tax-referred economic values of the data contained in said second type of file, said first tax-referred economic values being based on said optimal parameters;

d2) a second tax-referred processing unit (1120), receiving as an input the output of said second volume-referred processing unit (1020) and outputting second tax-referred economic values of the data contained in said second type of file, said second economic values being based on said reference parameters;

e) a set of fourth level adding units, comprising:

e1) a first adding unit (1210), adding the output of said second record-referred processing unit (50), the output of said first volume-referred processing unit (1010) and the output of said first tax-referred processing unit (1110) and outputting first sums, based on said optimal parameters;

e2) a second adding unit (1220), adding the output of said third record-referred processing unit (500), the output of said second volume-referred processing unit (1020) and the output of said second tax-referred processing unit (1120) and outputting second sums, based on said reference parameters; and

f) a minimization unit (900) for finding the lowest rating between said first sums and said second sums.

2. The telephone billing system according to claim 1,
characterized in that said processing units comprise memory units for containing control tables (Tabxc), parameter tables (Tabxa) and result tables (Tabxb), said tables being configurable in a dynamic way through a control unit.

3. The telephone billing system according to claim 2,
characterized in that said tables are configured by at least one among said rules:

- Horizontal Aggregation rule;
- Vertical Aggregation rule;
- Memory distribution rule with respect to a level; and
- ID homogeneity rule of a telephone contract in memory.

4. The telephone billing system according to any one of the preceding claims,
characterized in that said second record-referred processing unit (50) comprises:

- a control and memory unit (300); and
- a sorting and aggregation unit (700),

for processing the optimal parameters on which the outputs of the units b2), c1), d1) and e1) are based.

5. The telephone billing system according to claim 4,
characterized in that the read-write access to said control and memory unit (300) is performed by a binary tree structure, each leaf (20) of said binary tree being related to a particular set of subscribers, a set of files (21) organized in stacks being associated to each subscriber.

6. The telephone billing system according to claim 4 or 5,
characterized in that said control unit (300) outputs a Database Control Table and a File Control Table.

7. The telephone billing system according to any one of the claims 3 to 6, characterized in that the sorting and aggregation unit (700) performs the following steps:

 1) reading of telephone traffic data;
 2) sorting of said data;
 3) eliminating unnecessary fields from said data;
 4) aggregating the data thus obtained, according to logics different from case to case;
 5) rating of the aggregated data;
 6) sorting of the data thus rated;
 7) selecting the optimal parameters on the basis of the data sorted thereof.

**8.** The telephone billing system according to any one of the preceding claims, characterized in that said first and second volume-referred processing units (1010, 1020) receive as further inputs data related to other taxable costs not proportional to the traffic.

**9.** The telephone billing system according to any one of the preceding claims, characterized in that said first and second adding units (1210, 1220) receive as further inputs data related to other non taxable costs.

**10.** The telephone billing system according to any one of the preceding claims, characterized in that said minimization unit (900) makes use of the simplex method.

**11.** The telephone billing system according to claim 10, characterized in that said simplex method is used in accordance with what disclosed in the Annex A.

**12.** The telephone billing system according to any one of the preceding claims, characterized in that said minimization unit (900) takes into account discounts to tariff plans in which the applicability of the discount depends on the economical amount accrued, and its value is independent therefrom.

| 1 | 2 | 3 | 4 | 5 | 6 | 7 | 8 |
|---|---|---|---|---|---|---|---|
| CALLING NUMBER | CALLED NUMBER | ORIGIN ZONE | DESTINATION ZONE | START TIME | DURATION | INFORMATION NATURE | TRANSMISSION MEDIA |

Fig.1

Fig.2

Fig.3

Fig.4

Fig.5

Fig.6

Fig.8

E

302    301    303    300

FILE CONTROL

DATABASE CONTROL

TO UNIT 700

**Fig.7**

E    400

Tab 4a
Tab 4c

RATING

Tab 4b

401    402    403

TO UNIT 800

**Fig.9**

FROM UNIT 700          FROM UNIT 400                          800

Tab 8a
Tab 8c          RATING          Tab 8b

801          802          803

TO UNIT 1001

**Fig.10**

F          500

Tab 5a
Tab 5c          RATING          Tab 5b

501          502   503

TO UNIT 1002

**Fig.11**

Fig.12

Fig.13

FROM UNIT 1010

Tab 11a$_1$
Tab 11c$_1$

RATING

Tab 11b$_1$

1111

1112

1113

1110

TO UNIT 1210

Fig.14

FROM UNIT 1020

Tab 11a$_2$
Tab 11c$_2$

RATING

Tab 11b$_2$

1121

1122

1123

1120

TO UNIT 1220

Fig.15

| Code | Services | Costs Levels | | Costs | |
|---|---|---|---|---|---|
| S.a. | Service A | | | | |
| S.a.r.p. | | Record price | | PA1 | |
| S.a.r.d | | Record discount | | PA2 | |
| S.a.v.p | | Volume price | | PA3 | |
| S.a.v.d | | Volume discount | | PA4 | |
| | | Other taxable cost | | | |
| S.a.oc.a.f | | | Access fee | | PA4.1 |
| S.a.oc.m.f | | | Montly fee | | PA4.2 |
| | | | .......... | | PA4.3 |
| S.a.oc.s.f | | | Subscription fee | | PA4.4 |
| S.a.t | | tax | | PA5 | |
| S.a.onc | | Other non taxable cost | | PA6 | |
| S.k. | service K | | | | |
| S.k.r.p. | | Record price | | PK1 | |
| S.k.r.d | | Record discount | | PK2 | |
| S.k.v.p | | Volume price | | PK3 | |
| S.k.v.d | | Volume discount | | PK4 | |
| | | Other taxable cost | | | |
| S.k.oc.a.f | | | Access fee | | PK4.1 |
| S.k.oc.m.f | | | Monthly fee | | PK4.2 |
| | | | .......... | | PK4.3 |
| S.k.oc.s.f | | | Subscription fee | | PK4.4 |
| S.k.t | | tax | | PK5 | |
| S.k.onc | | Other not taxable cost | | PK6 | |
| S.n. | service N | | | | |
| S.n.r.p. | | Record price | | PN1 | |
| S.n.r.d | | Record discount | | PN2 | |
| S.n.v.p | | Volume price | | PN3 | |
| S.n.v.d | | Volume discount | | PN4 | |
| | | Other taxable cost | | | |
| S.n.oc.a.f | | | Access fee | | PN4.1 |
| S.n.oc.m.f | | | Monthly fee | | PN4.2 |
| | | | .......... | | PN4.3 |
| S.n.oc.s.f | | | Subscription fee | | PN4.4 |
| S.n.t | | tax | | PN5 | |
| S.n.onc | | Other not taxable cost | | PN6 | |

## Fig. 16

| Cod | PT1 | PT2 | PT3 | ..... | PTx |
|-----|-----|-----|-----|-------|-----|
| S.a.r.p. | 300 | 300 | 300 | ..... | 300 |
| S.a.r.d | 250 | 250 | 250 | ..... | 250 |
| S.a.v.p | ### | ### | ### | ..... | ### |
| S.a.v.d | ### | ### | ### | ..... | ### |
| S.a.oc.a.f | ### | ### | ### | ..... | ### |
| S.a.oc.m.f | ### | ### | ### | ..... | ### |
| S.a.oc.s.f | ### | ### | ### | ..... | ### |
| S.a.t | ### | ### | ### | ..... | ### |
| S.a.onc | ### | ### | ### | ..... | ### |
| S.k.r.p. | 120 | 150 | 120 | ..... | 150 |
| S.k.r.d | ### | ### | ### | ..... | ### |
| S.k.v.p | ### | ### | ### | ..... | ### |
| S.k.v.d | ### | ### | ### | ..... | ### |
| S.k.oc.a.f | ### | ### | ### | ..... | ### |
| S.k.oc.m.f | ### | ### | ### | ..... | ### |
| S.k.oc.s.f | ### | ### | ### | ..... | ### |
| S.k.t | ### | ### | ### | ..... | ### |
| S.k.onc | ### | ### | ### | ..... | ### |
| S.n.r.p. | ### | ### | ### | ..... | ### |
| S.n.r.d | ### | ### | ### | ..... | ### |
| S.n.v.p | ### | ### | ### | ..... | ### |
| S.n.v.d | ### | ### | ### | ..... | ### |
| S.n.oc.a.f | ### | ### | ### | ..... | ### |
| S.n.oc.m.f | ### | ### | ### | ..... | ### |
| S.n.oc.s.f | ### | ### | ### | ..... | ### |
| S.n.t | ### | ### | ### | ..... | ### |
| S.n.onc | ### | ### | ### | ..... | ### |

Fig.17

| Cod | PT1 | PT2 |
|---|---|---|
| S.voice.r.p | 350 ITL/min | 400 ITL/min |
| S.voice.r.d | 0 | 0 |
| S.voice.v.p | 0 | 0 |
| S.voice.v.d | 25% | 25% |
| S.voice.oc.a.f | 130 £ | 100 £ |
| S.voice.t | 19% | 19% |
| S.voice.onc | 0 | 0 |
| S.sms.r.p | 150 ITL/mess. | 150 ITL/mess. |
| S.sms.r.d | 5% | 5% |
| S.sms.v.p | 0 | 0 |
| S.sms.v.d | 25% | 25% |
| S.sms.oc.a.f | 90 | 90 |
| S.sms.t | 19% | 19% |
| S.sms.onc | 0 | 0 |
| S.vm.r.p | 200 ITL/min | 200 ITL/min |
| S.vm.r.d | 0 | 0 |
| S.vm.v.p | 0 | 0 |
| S.vm.v.d | 0 | 0 |
| S.vm.oc.a.f | 0 | 0 |
| S.vm.t | 19% | 19% |
| S.vm.onc | 0 | 0 |

Fig. 18

LEVEL 1 (record)

(S.voice r.p.)　　UNIT　200
(S.voice r.d.)　　UNIT　400
(S.voice oc.a.f.)　UNIT　500

LEVEL 2 (volume)

(S.voice v.p.)　　UNIT　1010
(S.voice v.d.)　　UNIT　1020

LEVEL 3 (taxes)

(S.voice. t.)　　UNIT　1110
　　　　　　　　UNIT　1120

LEVEL 4 (other costs)

(S.voice. t.)　　UNIT　1210
　　　　　　　　UNIT　1220

Fig.19

Fig.20

| Number of Tariff Plans | Number of subscribers | | | | | | | |
|---|---|---|---|---|---|---|---|---|
| | 50.000 | 250.000 | 500.000 | 750.000 | 1.500.000 | 2.000.000 | 2.500.000 | 3.500.000 |
| 3 | 130 Gby | 680 Gby | 1,30 Tby | 2,00 Tby | 4,1 Tby | 5,40 Tby | 6,80 Tby | 9,50 Tby |
| 6 | 270 Gby | 1,30 Tby | 2,70 Tby | 4,10 Tby | 8,21 Tby | 11 Tby | 13,5 Tby | 19,0 Tby |
| 9 | 410 Gby | 2,05 Tby | 4,10 Tby | 6,10 Tby | 12,0 Tby | 16,4 Tby | 20,5 Tby | 28,5 Tby |
| 10 | 450 Gby | 2,20 Tby | 4,50 Tby | 6,80 Tby | 13,7 Tby | 18,0 Tby | 22,8 Tby | 31,5 Tby |
| 11 | 500 Gby | 2,50 Tby | 5,00 Tby | 7,50 Tby | 15,0 Tby | 20,0 Tby | 25,0 Tby | 35,0 Tby |
| 12 | 540 Gby | 2,70 Tby | 5,4 Tby | 8,20 Tby | 16,0 Tby | 21,5 Tby | 27,0 Tby | 38,0 Tby |
| 13 | 590 Gby | 2,90 Tby | 5,9 Tby | 8,90 Tby | 17,5 Tby | 23,5 Tby | 29,5 Tby | 41,5 Tby |
| 14 | 630 Gby | 3,15 Tby | 6,3 Tby | 9,50 Tby | 19,0 Tby | 25,5 Tby | 31,5 Tby | 44,5 Tby |
| 15 | 680 Gby | 3,40 Tby | 6,8 Tby | 10,0 Tby | 20,5 Tby | 27,0 Tby | 34,0 Tby | 47,5 Tby |

## Fig. 21

### ROUGH UNRATED TRAFFIC

| Memory dimension independent from the number of Tariff Plans | Number of subscribers | | | | | | | |
|---|---|---|---|---|---|---|---|---|
| | 50.000 | 250.000 | 500.000 | 750.000 | 1.500.000 | 2.000.000 | 2.500.000 | 3.500.000 |
| | 3 Gby | 15 Gby | 31 Gby | 47 Gby | 95 Gby | 127 Gby | 159 Gby | 223 Gby |

## Fig. 22

| Number of Tariff Plans | Number of subscribers | | | | | | | |
|---|---|---|---|---|---|---|---|---|
| | 50.000 | 250.000 | 500.000 | 750.000 | 1.500.000 | 2.000.000 | 2.500.000 | 3.500.000 |
| 3 | 1,5 Gby | 7,5 Gby | 15 Gby | 22 Gby | 45 Gby | 60 Gby | 75 Gby | 100 Gby |
| 6 | 3 Gby | 15 Gby | 30 Gby | 45 Gby | 90 Gby | 120 Gby | 150 Gby | 200 Gby |
| 9 | 4,5 Gby | 22,5 Gby | 45 Gby | 67,5 Gby | 135 Gby | 180 Gby | 225 Gby | 315 Gby |
| 12 | 6 Gby | 30 Gby | 60 Gby | 90 Gby | 180 Gby | 240 Gby | 300 Gby | 420 Gby |
| 15 | 7,5 Gby | 37 Gby | 75 Gby | 112 Gby | 220 Gby | 300 Gby | 375 Gby | 520 Gby |
| 20 | 10 Gby | 50 Gby | 120 Gby | 150 Gby | 300 Gby | 400 Gby | 500 Gby | 700 Gby |
| 25 | 12,5 Gby | 62,5 Gby | 125 Gby | 187 Gby | 370 Gby | 500 Gby | 625 Gby | 870 Gby |
| 30 | 15 Gby | 75 Gby | 150 Gby | 225 Gby | 450 Gby | 600 Gby | 750 Gby | 1 Tby |
| 50 | 25 Gby | 125 Gby | 250 Gby | 375 Gby | 750 Gby | 1 Tby | 1,2 Tby | 1,75 Tby |

## Fig. 23

2003

2004

2006

2007

155 Mbps

155 Mbps

155 Mbps

155 Mbps

155 Mbps

2008

2005

155 Mbps

155 Mbps

155 Mbps

2009

2001

302

2002

Tab x a, Tab x b, Tab x c

Fig. 24

**European Patent Office**

**EUROPEAN SEARCH REPORT**

Application Number

EP 99 83 0125

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 5 659 601 A (CHESLOG ROBERT JACOB) 19 August 1997 (1997-08-19) * column 1, line 6 - line 47 * * column 4, line 34 - column 5, line 13 * * figures 1,2 * | 1-12 | H04M15/00 |
| A | WO 96 41492 A (CORAL SYSTEMS INC) 19 December 1996 (1996-12-19) * page 2, line 24 - page 3, line 11 * * page 7, line 21 - page 8, line 2 * * page 19, line 1 - page 20, line 15 * * figure 3 * | 1 | |
| A | EP 0 876 047 A (AT & T CORP) 4 November 1998 (1998-11-04) | | |

TECHNICAL FIELDS SEARCHED (Int.Cl.7)

H04M

The present search report has been drawn up for all claims

| Place of search | Date of completion of the search | Examiner |
|---|---|---|
| THE HAGUE | 20 August 1999 | Neves Appelt, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 99 83 0125

This annex lists the patent family members relating to the patent documents cited in the above-mentioned European search report.
The members are as contained in the European Patent Office EDP file on
The European Patent Office is in no way liable for these particulars which are merely given for the purpose of information.

20-08-1999

| Patent document cited in search report | | Publication date | Patent family member(s) | | Publication date |
|---|---|---|---|---|---|
| US 5659601 | A | 19-08-1997 | NONE | | |
| WO 9641492 | A | 19-12-1996 | US<br>AU<br>AU<br>CA<br>EP | 5907800 A<br>704871 B<br>6041396 A<br>2223180 A<br>0882371 A | 25-05-1999<br>06-05-1999<br>30-12-1996<br>19-12-1996<br>09-12-1998 |
| EP 0876047 | A | 04-11-1998 | US<br>CA | 5915006 A<br>2233730 A | 22-06-1999<br>01-11-1998 |